# EUROPEAN PATENT APPLICATION

(11) **EP 4 723 322 A1**
(43) Date of publication of application: **08.04.2026**
(21) Application number: 25205978.7
(22) Date of filing: 01.10.2025
(51) Int. Cl.: H01M 50/152, H01M 50/169, H01M 50/342

(54) **BATTERY CELL, AND BATTERY PACK AND VEHICLE INCLUDING THE SAME**

(30) Priority: 07.10.2024 KR 20240136004
(71) Applicant: LG Energy Solution, Ltd., Seoul 07335 (KR)
(72) Inventor: HONG, Tae-Rim, 34122 Daejeon (KR); CHO, Sung-Min, 34122 Daejeon (KR); KIM, Do-Gyun, 34122 Daejeon (KR); BAEK, Jun-Ho, 34122 Daejeon (KR); LEE, Seung-Hun, 34122 Daejeon (KR)
(74) Representative: Goddar, Heinz J.

(57) **Abstract**

A battery cell according to the present disclosure includes an electrode assembly, a cell housing, and a can lid. The can lid may include an edge portion formed on an edge to be coupled to the cell housing; and an electrode coupling portion coupled to the electrode assembly and recessedly formed. The edge portion of the can lid has a profiled geometry configured to deform in the radial direction when engaging an inner surface of the cell housing in a press-fit manner.

## Description

### TECHNICAL FIELD

The present disclosure relates to a battery cell, and a battery pack and a vehicle including the same. The present disclosure also relates to a method for manufacturing a battery cell.

### BACKGROUND ART

There is an increasing demand for battery cells in the form of metal cans to be used in vehicle battery packs. The shape of the metal cans may be prismatic or cylindrical. Cylindrical battery cells have a structure in which a jelly-roll-shaped electrode assembly is accommodated inside the cylindrical can. Cylindrical battery cells have the advantage of being more robust to shock or temperature than a pouch-type battery cell.

The process of manufacturing a battery cell using a cylindrical can may include a step of manufacturing a cell housing by deep drawing a metal sheet to mold a circular bottom portion and a circular tubular sidewall portion connected thereto, accommodating an electrode assembly inside the cell housing, and then covering the open end of the cell housing with a can lid to finish manufacturing of the battery cell. Butt welding or a beading and crimping method may be used to connect the can lid and cell housing at its open end.

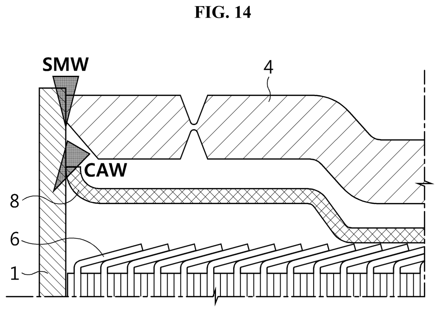

FIG. 14 illustrates a case where a sidewall portion 1 of a cell housing and a can lid are butt welded and finished in a conventional battery cell.

When the sidewall portion 1 of the cell housing and the can lid 4 are butt welded (SMW), there is an advantage that the internal space of the cell housing may be utilized better than when using beading and crimping. Accordingly, energy density may be increased. However, if there is a gap between the sidewall portion 1 of the cell housing and the can lid 4, the welding laser may be incident into the internal space of the cell housing and damage the electrode assembly 6. Further, the thickness of the welded portion may be reduced and thus the welded portion may not have a sufficient welding strength. If high-precision fabrication is required to reduce tolerances so that there is no gap between the sidewall portion 1 of the cell housing and the can lid 4, the cost of manufacturing battery cells increases. Further, when tack welding is required to properly fix the can lid 4 and the sidewall portion 1 of the cell housing during welding, assembly efficiency and productivity decrease and manufacturing costs increase. Therefore, it is necessary to improve the structure between the edge of the can lid 4 and the sidewall portion 1 of the cell housing so as to facilitate (almost) gap-free assembly, thereby omitting the tack welding and preventing damage to the electrode assembly 6.

In addition, in the conventional battery cell illustrated in FIG. 14, welding (CAW) between the negative electrode current collector plate 8 and the sidewall portion 1 of the cell housing is also required. There is a limitation that the welding (CAW) is added in addition to butt welding (SMW) and a component called the negative electrode current collector plate 8 is required in addition to the can lid 4. This increases the number of manufacturing steps and complicates the assembly process.

### DISCLOSURE

### Technical Problem

The present disclosure is designed to solve one or more of the above-described problems. The present disclosure is also directed to providing a battery cell capable of increasing assembly efficiency and productivity, specifically, in manufacturing processes that use butt welding to connect a sidewall portion of a cell housing and a can lid.

The present disclosure is further directed to providing a battery cell capable of more efficiently utilizing the space inside the battery cell and preventing damage to an electrode assembly when using butt welding to connect a can lid to an opening of a cell housing. The present disclosure is also directed to providing a battery cell capable of more efficiently utilizing the space inside the battery cell and preventing damage to an electrode assembly when using butt welding to connect a can lid to an opening of a cell housing.

### Technical Solution

The present disclosure provides a can lid. The present disclosure is also directed to a battery cell including such a can lid. The present disclosure is further directed to providing a battery pack and a vehicle including such a battery cell.

To address one or more of the above-described problems, the present disclosure generally describes a functional design of the can lid that serves as a closure and/or seal for the opening of a battery cell housing (battery can). The can lid may be particularly suited for battery cells in which the lid is bonded to the battery can using butt welding, but this disclosure is not limited in this respect.

One aspect of the present disclosure provides a functional design of the can lid's edge portion, which is specifically configured to enable press-fit insertion into the cell housing. This press-fit capability may facilitate a gap-free mechanical engagement with the inner circumferential surface of the housing, thereby enhancing assembly precision and weld quality while the need for tack welding may also be eliminated in some implementations.

To achieve this functionality, the edge portion of the can lid according to the present disclosure may be formed with a profiled geometry adapted to engage the inner surface of the cell housing, e.g. the edge portion may have a curved or contoured shape (e.g. the edge portion may be U-shaped). The edge portion of the can lid may be located at and may form the outer radial perimeter of the can lid. This profiled geometry of the edge portion of the can lid may include a mating portion extending in the axial direction of the cell housing to come into contact the inner wall of the cell housing, a curved transition region that allows elastic (or elastic and plastic) deformation during insertion of the can lid into the cell housing, and an inclined portion. This structural configuration enables the can lid to deform during insertion to establish a stable radial interference fit with the cell housing. The edge portion may thus provide the elastic compliance of the connection between the can lid and the cell housing, with the curved portion and inclined portion acting as a spring element of low stiffness. This applies in particular to the elastic component of the deformation, in cases where the edge portion undergoes both elastic and plastic deformation.

Optionally, the edge portion may be spaced apart from the electrode assembly in the axial direction. For example, an axially inner end of the bent structure of the edge portion of the can lid may be separated from the uncoated portion of the electrode of the electrode assembly installed in the cell housing. This separation distance may prevent welding heat or mechanical stress from being transferred to the electrode assembly during sealing, thereby avoiding thermal or structural damage to the electrode tabs.

Optionally, the can lid may also serve as a current collector, for example, for the negative or positive electrode of the jelly-roll electrode assembly housed within the cell. For this purpose, one or more electrode coupling portions of the can lid may be directly (i.e. without an intermediate element) bonded to one of the electrode assembly (for example, to an uncoated portion of one of the electrodes of the electrode assembly) to establish an electric connection one or more electrode coupling portions of the can lid and the electrode assembly. This may allow eliminating the use of a separate current collector plate.

By reducing the number and/or volume of components required at the open end of the cell housing to provide electrical connection and sealing, the design allows for a larger jelly-roll electrode assembly to be accommodated within the same cell volume, thereby enabling an increase in energy density without altering the external dimensions of the battery cell. Moreover, because the press-fit design of the can lid may eliminate gaps between the lid and the housing, it may prevent the welding laser from entering the interior of the battery cell during butt welding. This protects the uncoated portion of the electrode assembly from direct laser exposure, allowing it to be positioned closer to the lid and thereby improving packaging efficiency and electrical connectivity. In addition, an axial separation of the edge portion from the electrode assembly, e.g. as defined by a spacing (T) between the axially lower end of the edge portion and the electrode assembly, may further prevent undesirable heat transfer during welding, thereby avoiding thermal damage to the uncoated portion or foil tabs of the electrode assembly.

One aspect of the present disclosure relates to a battery cell according that includes an electrode assembly, a cell housing, and a can lid. The can lid may include an edge portion formed on an edge (e.g. along an outer periphery) of the can lid. The edge portion of the cell lid is to be coupled to the cell housing. The can lid may further include an electrode coupling portion coupled to the electrode assembly. The electrode coupling portion may be recessedly formed (e.g. may have a recessed shape). An end of the edge portion (or bottom portion of the edge portion) that is close to the electrode assembly is spaced apart from the electrode assembly.

As noted above, this end or bottom portion ("bottom") of the edge portion may be a lower end of the edge portion (i.e. in the axial direction of the electrode assembly and/or cell housing) facing the electrode assembly installed in the cell housing. In some example implementation, the electrode coupling portion may be arranged radially inward toward the central axis of the cell housing and, in the radial direction, may be spaced apart from the edge portion that serves as the welding region.

The bottom of the edge portion is spaced apart from the electrode assembly. The electrode coupling portion is in contact with the electrode assembly.

The edge portion may include a mating portion, a curved portion, and an inclined portion from a radially outer side to an inner side.

The mating portion, the curved portion, and the inclined portion may form a U-shaped bent portion.

A gap or spacing is provided between a lower surface of the U-shaped bent portion and a lower surface of the electrode coupling portion. The gap or spacing is provided between a lower surface of the U-shaped bent portion and a lower surface of the electrode coupling portion may refer to a separation distance between the two surfaces in the axial direction of the electrode assembly and/or cell housing.

The cell housing may include a sidewall portion, an opening provided at one axial end of the sidewall portion, and a bottom portion connected to the other axial end of the sidewall portion. In other words, the cell housing may include a bottom portion and a sidewall portion connected to the bottom portion, the sidewall portion extending in the axial direction, and a side of the sidewall portion that is not connected to the bottom portion may define an opening of the cell housing.

The cell housing is configured to accommodate the electrode assembly therein. The can lid may cover the opening of the cell housing.

The edge/edge portion of the can lid may be bonded to the sidewall portion of the cell housing so that the cell housing and the can lid are electrically connected while the electrode assembly is accommodated inside the cell housing. The bonding between the edge/edge portion of the can lid and the sidewall portion of the cell housing may be performed by welding, brazing, or soldering.

The electrode assembly includes a first electrode and a second electrode. The electrode assembly may be accommodated inside the cell housing so that an uncoated portion of the second electrode faces the opening of the cell housing.

The can lid may be electrically connected to the cell housing.

The can lid and the cell housing may be electrically connected through a bonding part between an inner circumferential surface of the cell housing and the edge/edge portion of the can lid.

The can lid may be laser welded to the cell housing.

The edge portion of the can lid may be bonded to the inner circumferential surface of the cell housing by seam welding.

The seam welding may be performed by a laser irradiated inward in the axial direction.

The can lid may be electrically connected to the uncoated portion of the second electrode.

The can lid may be directly bonded to the uncoated portion of the second electrode.

The can lid may be laser welded to the uncoated portion of the second electrode.

The can lid may serve as a negative electrode current collector plate.

The can lid may have a disk shape to cover the opening of the cell housing.

The can lid may be pressed into through the opening of the cell housing.

The mating portion extends axially to contact the inner circumferential surface of the sidewall portion of the cell housing.

The electrode coupling portion may be electrically connected to the uncoated portion of the second electrode.

The can lid may further include a support surface that provides a flat surface between the inclined portion of the edge portion and the electrode coupling portion of the can lid. The electrode coupling portion may be connected to the radially inner side of the support surface and may be recessed toward the inner side of the cell housing (i.e. in the axial direction of the cell housing).

The electrode coupling portion may be provided by plastic processing so that a predetermined part of the can lid in the form of a metal sheet is recessed axially inward.

The bonding part of the electrode coupling portion and the uncoated portion of the second electrode may extend radially.

The can lid may include a plurality of electrode coupling portions which may be spaced apart from each other. The spacing may be defined in a plane perpendicular to the axial direction of the cell housing, such that the electrode coupling portions are arranged at distinct positions when the can lid is viewed along the axial direction.

The can lid may include a plurality of electrode coupling portions which are disposed radially with respect to a center of the can lid.

The plurality of electrode coupling portions may be formed and disposed radially symmetrically relative to the center of the can lid.

One or more vent notch portions may be provided on the can lid.

The one or more vent notch portions may be defined by a thin wall portion.

The vent notch portion may be provided radially further outward than the electrode coupling portion.

The one or more vent notch portions may be provided on the support surface of the can lid.

The one or more vent notch portions may be included on the opposite surface of a surface of the can lid facing the electrode assembly in the can lid.

The one or more vent notch portions may be formed between the electrode coupling portion and the edge portion.

The can lid may be a metal sheet including a plating layer on both surfaces.

For example, the can lid may be nickel-plated steel (NPS).

In a cross-section perpendicular to the can lid, the vent notch portion may have a V-shaped or U-shaped cross-section. A cross-section perpendicular to the can lid may correspond to a section taken along the axial direction of the cell housing, i.e., perpendicular to the planar surface of the can lid.

In an upper surface of the can lid, the vent notch portion may have a closed loop shape.

The can lid may be provided with an injection port. The injection port may be used for introducing an electrolyte into the interior of the cell housing after the electrode assembly has been accommodated therein.

For example, the injection port may be provided in the center of the electrode coupling portion.

The can lid may further include a flat portion surrounding the injection port. The electrode coupling portion of the can lid may be positioned between the flat portion and the edge portion of the can lid.

The one or more electrode coupling portions may extend between the flat portion and the edge portion.

The can lid may have three electrode coupling portions.

The can lid may further include one or more bridge (or bridge portions) that extends radially from the flat portion. A bridge may be formed to partition two adjacent electrode coupling portions. Each bridge portion may separate two adjacent electrode coupling portions (in a circumferential direction).

The can lid may further include a plug coupling portion in which a plug is inserted and held in place. In other words, the plug coupling portion is configured to receive and retain a plug. The injection port is formed at the center of the plug coupling portion.

The flat portion of the can lid may have a bent portion recessed toward the injection port of the can lid. The electrode coupling portion of the can lid may have an extension portion extending toward the bent portion of the can lid.

The can lid may further include one or more picking portions that form one or more picking areas. A picking area may be an area of the can lid that is disposed between two adjacent electrode coupling portions and the edge portion.

Another aspect of the present disclosure relates to a battery pack that may include one or more battery cells according to the present disclosure. For example, the battery cells may arranged in the battery pack with a uniform orientation such that the bottom portions of the battery cells are disposed at one side of the battery pack and the can lids are disposed at an opposite side of the battery pack. The battery pack may further include a battery pack housing configured to accommodate the battery cell(s).

A further aspect of the present disclosure relates to a vehicle that may include a battery pack according to the present disclosure.

### Advantageous Effects

According to one aspect of the present disclosure, the can lid may be pressed into the inner circumferential surface of the sidewall portion of the cell housing to reduce the occurrence of a gap between the sidewall portion of the cell housing and the edge of the can lid. This press-fit configuration is enabled by the structural design of the can lid's edge portion, which may have a profiled geometry allowing elastic radial deformation during insertion and expansion thereafter, thereby ensuring a tight interference fit.

According to one aspect of the present disclosure, assembly efficiency and productivity may be improved through pressure insertion of the can lid. The elimination of a can lid alignment step (and elimination of an additional tack-welding step) may result in a more streamlined manufacturing process and reduced assembly time, while the self-aligning press-fit design ensures repeatable and robust positioning of the can lid relative to the cell housing.

According to one aspect of the present disclosure, the edge of the can lid may be closely butt bonded to the inner circumferential surface of the cell housing, so that there is no need for tack welding and the laser of the butt welding is not incident into the internal space of the cell housing, thereby causing no damage to the electrode assembly. The tight press-fit contact at the welding interface ensures that laser energy is confined to the bonding region and does not pass through any unintended gaps. This shielding effect is particularly important for protecting the uncoated portions of the electrode assembly from direct laser exposure. Moreover, there is no concern about thinning of the welded portion, and sufficient welding strength may be reliably maintained.

According to some implementations of the present disclosure, the edge of the can lid may be configured as a U-shaped shaped portion, and this U-shaped shaped portion may be spaced apart from the electrode assembly. Accordingly, welding heat during seam welding may be prevented from being directly conducted to the electrode assembly, thereby avoiding thermal damage to the electrode assembly. Since the U-shaped shaped portion of the can lid and the electrode assembly are not in physical contact with each other, there is no impact on the electrode assembly, particularly the second uncoated portion, which may prevent cracking or kinking in the second uncoated portion. This separation of the U-shaped shaped portion of the can lid and the electrode assembly may also allow the uncoated portion of the electrode to be positioned closer to the central region of the can lid (i.e., the one or more electrode coupling portions), improving packaging efficiency and electrical connectivity while maintaining thermal safety during welding.

According to some implementations of the present disclosure, a bonding part between the can lid and the cell housing is simplified, and there is no need to use a current collector plate when electrically connecting the electrode assembly to the can lid, which may reduce the number of parts and assembly man-hours and further secure the internal volume, thereby further increasing energy density. The dual functionality of the can lid as both a structural sealing member and a current collector eliminates redundant interfaces and maximizes the space available for active electrode materials, which may in turn improve volumetric energy density of the battery cell.

According to still another aspect of the present disclosure, when the can lid and the electrode assembly are directly welded, the can lid may be stably and evenly formed to be flat with the electrode assembly, thereby improving the welding quality with the electrode assembly. The recessed geometry of the one or more electrode coupling portions allows them to align with and contact the uncoated foil tabs in a planar fashion, thereby promoting uniform weld formation and minimizing contact resistance.

According to still another aspect of the present disclosure, a battery cell using butt welding is provided, so that energy density may be increased compared to a battery cell using a beading and crimping method. The compact sealing design reduces the space required at the open end of the cell housing, thereby enabling a larger jelly-roll electrode assembly to be accommodated within the same external dimensions, resulting in improved volumetric energy density.

### DESCRIPTION OF DRAWINGS

The accompanying drawings illustrate aspects of the present disclosure and together with the disclosure, serve to provide a further understanding of the technical features of the present disclosure. Thus, the present disclosure is not limited to the aspects depicted in the drawings.
FIG. 1 is a perspective view schematically depicting a battery cell according to an aspect of the present disclosure .
FIG. 2 is a side cross-sectional view showing a cross-section of a battery cell according to an aspect of the present disclosure.
FIG. 3 is a plan view showing a can lid according to an aspect of the present disclosure.
FIG. 4A is a side cross-sectional view taken along section line A-A' of FIG. 3.
FIG. 4B is a side cross-sectional view showing, in an enlarged manner, a region around an injection port of a battery cell according to an aspect of the present disclosure.
FIG. 5 is another side cross-sectional view taken along section line A-A' of FIG. 3.
FIG. 6 is a perspective view of a can lid according to an aspect of the present disclosure.
FIG. 7 is a plan view of a can lid according to an aspect of the present disclosures.
FIG. 8 is a side cross-sectional view taken along section line A-A' in FIG. 7.
FIG. 9 is a cross-sectional view showing an example of a can lid included in a battery cell according to still another embodiment of the present disclosure.
FIG. 10 is an perspective view of the upper side of the can lid shown in FIG. 9.
FIG. 11 is a perspective view of the lower side of the can lid shown in FIG. 10.
FIG. 12 is a perspective view schematically depicting a battery pack according to an aspect of the present disclosure.
FIG. 13 is a schematic view for describing a vehicle including a battery pack according to an aspect of the present disclosure.
FIG. 14 illustrates a case where a sidewall portion of a cell housing and a can lid are butt welded and finished in a conventional battery cell.

### DETAILED DESCRIPTION

Hereinafter, different embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations illustrated in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For clarity and conciseness, descriptions of substantially identical or similar configurations are omitted where appropriate, and emphasis is placed on highlighting the distinguishing features of each embodiment.

In the present disclosure, the axial direction may be defined as the x-direction, which is colinear with the central axis of the can lid and perpendicular to the main plane (y-z plane) of the can lid. The can lid may, for example, have a disk shape and may mainly extend in the y-z plane. The radial direction may be defined as any direction extending from the central axis of the can lid toward the periphery, lying in the y-z plane (i.e., the main plane of the can lid). The circumferential direction may be defined as the tangential direction along a circle centered on the central axis of the can lid, likewise lying in the y-z plane and orthogonal to the corresponding radial direction.

Further, the terms "upper" and "outer" are used in this disclosure to indicate a structure facing away from the interior of the cell housing in the axial direction (i.e., facing away from the electrode assembly disposed in the cell housing), while the terms "lower" and "inner" refer to a structure facing toward the interior (internal volume) of the cell housing in the axial direction (i.e., facing the electrode assembly). Similarly, when used in connection with the axial direction (x), the term "outward" denotes a structure facing or extending away from the interior of the cell housing along the axial direction, while the term "inward" denotes a structure facing or extending toward the interior of the cell housing along the axial direction. When used in connection with the radial or circumferential direction, the term "outward" denotes a structure facing or extending away from the central axis of the can lid, while the term "inward" denotes a structure facing or extending toward the central axis of the can lid.

The axial direction (x) of the can lid may be colinear to central axis of the cell housing to which the can lid can be attached. Accordingly, with respect to the cell housing, the radial direction may be defined as any direction extending from the central axis of the cell housing toward its periphery, lying in the y-z plane. The circumferential direction may be defined as the tangential direction along a circle centered on the central axis of the battery can, likewise lying in the y-z plane and orthogonal to the corresponding radial direction.

For convenience of description, the axial direction along the longitudinal direction of the winding axis of the electrode assembly wound in the form of a jelly-roll may also be colinear with the axial direction (x) of the can lid. Stated differently, the axial direction of the electrode assembly refers to the direction parallel to the longitudinal axis of the jelly-roll-shaped electrode assembly, i.e., along the winding axis. The direction closer to or farther away from the winding axis is referred to as the radial direction. Put differently, the radial direction of the electrode assembly is defined as the direction extending perpendicular to the axial direction and pointing outward from the winding axis toward the inner surface of the cell housing. The direction surrounding the winding axis of the electrode assembly is referred to as the circumferential direction or the perimeter direction. Again put differently, the circumferential direction (also referred to as the perimeter direction) is tangential to the radial direction and lies in a plane perpendicular to the axial direction, encircling the winding axis.

Meanwhile, terms indicating directions such as upper, lower, left, right, front, and rear may be used in the present disclosure, but these terms are only for convenience of description, and it is obvious to those skilled in the art that the terms may vary depending on the position of a reference object or an observer.

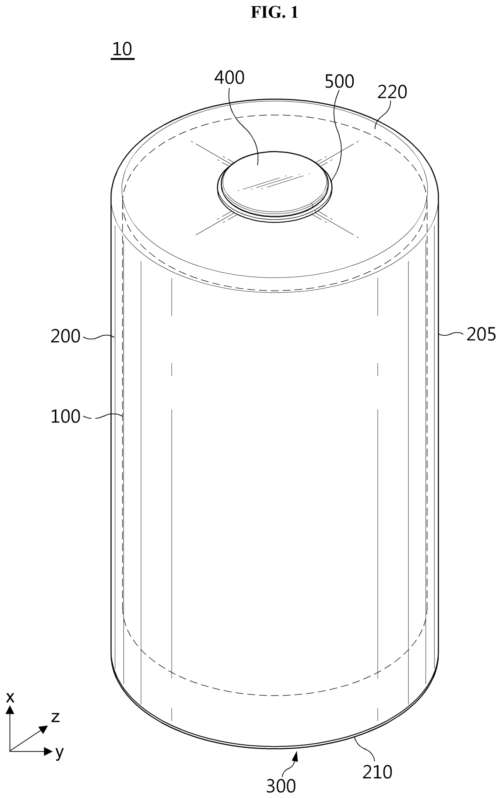

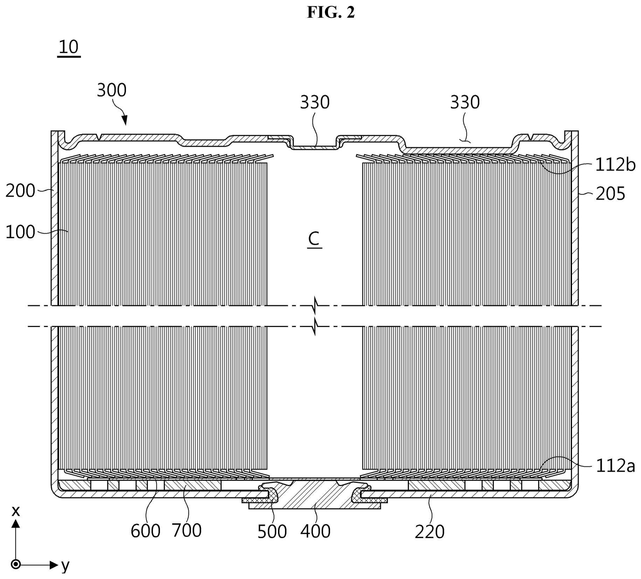

FIG. 1 is a perspective view schematically depicting a battery cell 10 according to an aspect of the present disclosure. FIG. 2 is a side cross-sectional view of a battery cell 10 according to an aspect of the present disclosure.

Referring to FIGS. 1 and 2, a battery cell 10 according to the present disclosure may include an electrode assembly 100, a cell housing 200, and a can lid 300. The cell housing 200 may be integrally formed. The cell housing 200 may have a sidewall portion 205. The sidewall portion 205 may have a cylindrical shape. The cell housing 200 may also include a bottom portion 220 at one axial end (in the x-direction) of the cell housing 200 has a bottom portion 220. The sidewall portion 205 may connect to the bottom portion 220. In the example shown in FIG. 1, a connecting portion between the sidewall portion 205 and the bottom portion 220 of the cell housing 200 may have a curved shape. The other axial end of the cell housing 200, which is opposite the before mentioned one end in the axial direction (x-direction) of the battery housing 200 has an opening 210. The electrode assembly 100 may be inserted into the cell housing 200 through the opening 210. The opening 210 may be closed and/or sealed by the can lid 300.

The battery cell 20 may be a secondary battery configured to be chargeable and dischargeable. For example, the battery cell 10 may be a cylindrical battery cell.

The electrode assembly 100 may include a first electrode, a second electrode and a separator interposed therebetween. The first electrode and the second electrode and the separator interposed therebetween may be stacked to form a stack. The first electrode may have a first polarity, and the second electrode may have a second polarity that is opposite to the first polarity. For example, the first polarity may be positive, and the second polarity may be negative. The stack of the first electrode, the second electrode, and the separator of the electrode assembly 100 may be wound around a winding axis and provided in the form of a jelly-roll that is formed around an inner core C. The inner core C may be referred to as a hollow portion at the winding center of the electrode assembly. The inner core C may be as substantially cylindrical void formed in the center of the electrode assembly. The electrodes (i.e. the first electrode and the second electrode) may each have an uncoated portion 112a, 112b that does not include any active material. The uncoated portion 112a, 112b may have a plurality of notched foil tabs.

For example, the first electrode may comprise a positive electrode plate. A positive electrode active material may be applied onto one surface or both surfaces of the positive electrode plate. The first electrode may have a first uncoated portion 112a where the positive electrode plate is not coated with any positive electrode active material. The first uncoated portion 112a may be formed at a long side end of the positive electrode plate. The first uncoated portion 112a may be exposed to the outside of the separator while forming a plurality of winding turns relative to the center of the electrode assembly 100. The first uncoated portion 112a may be directly used as an electrode tab.

The second electrode may be a negative electrode plate. A negative electrode active material may be applied onto one surface or both surfaces of the negative electrode plate. The second electrode may have a second uncoated portion 112b where the negative electrode plate is not coated with any negative electrode active material. The second uncoated portion 112b may be formed at a long side end of the negative electrode plate. The second uncoated portion 112b may be exposed to the outside of the separator while forming a plurality of winding turns relative to the center of the electrode assembly 100. The second uncoated portion 112b may be directly used as an electrode tab.

That is, the positive electrode plate and the negative electrode plate may each include an uncoated portion 112a, 112b that is not coated with the active material at a long side end of the positive electrode plate and the negative electrode plate extending in the winding direction. Further, the first uncoated portion 112a and the second uncoated portion 112b may be configured to face opposite directions.

In some embodiments of the present disclosure, the first uncoated portion 112a and the second uncoated portion 112b may include tabs or segments (not shown in the drawings). The tabs or segments may be formed by forming notches at predetermined or variable intervals in the first uncoated portion 112a and/or the second uncoated portion 112b. The tabs or segments may also be denoted flags. In the jelly-roll-shaped electrode assembly 100, the tabs may be bent radially and may be optionally flattened. The bending and optional flattening of the tabs may provide a (flat) contact surface for bonding to a current collector 600 or the can lid 300 as outlined in more detail below. As illustrated in FIG. 2, the tabs may be bent radially inward (i.e. towards the core C of the electrode assembly 100) or outward (i.e. away from the core C of the electrode assembly 100). The tabs may be bent one by one during the process of winding the stack to form the jelly-roll-shaped electrode assembly 100. Alternatively, the tabs may be bent all at once after the stack is wound to form the jelly-roll-shaped electrode assembly 100. The tabs of the first uncoated portion 112a and the tabs of the second uncoated portion, which are bent radially and overlapped in this way, may each provide a plane substantially perpendicular to the axial direction at both axial ends of the electrode assembly 100.

A positive electrode current collector plate 600 may be bonded to the tabs of the first uncoated portion 112a. For example, the positive electrode current collector plate 600 may be welded to the (flat) contact surface formed by the bent and optionally flattened tabs of the first uncoated portion 112a. The positive electrode current collector plate 600 may be manufactured by punching, trimming, piercing, and bending a metal sheet. Specifically, the positive electrode current collector plate 600 is made of a conductive metal material and is connected to the first uncoated portion 112a of the electrode assembly 100. When the first uncoated portion 112a has a bent shape, the space occupied by the first uncoated portion 112a is reduced, which may allow for increasing the size of the electrode assembly 100 that can be accommodated into the cell housing 200 thereby increasing the energy density of the battery cell 10. Additionally, an increase in the coupling area between the first uncoated portion 112a and the positive electrode current collector plate 600 at the (flat) contact surface may improve the coupling force and reduce the internal resistance of the battery cell 10. An increased coupling force may be for example desirable for battery cells 10 used in vehicles, where the battery cells 10 are subject to vibrations.

This electrode assembly 100 may be accommodated inside the cell housing 200. The electrode assembly 100 may be accommodated in the cell housing 200 by inserting the electrode assembly 100 through an opening 210 formed in the cell housing 200.

The cell housing 200 may be integrally formed. The cell housing 200 may be a can (e.g. a U-shaped can) including a sidewall portion 205, an opening 210 provided at one axial end of the sidewall portion 205, and a bottom portion 220 connected to the other axial end of the sidewall portion 205. In other words, the cell housing 200, which may also be denoted a battery can, may include a bottom portion 220 and a sidewall portion 205 connected to the bottom portion 220, and a side of the sidewall portion 205 that is not connected to the bottom portion 220 may define an opening 210 of the can. The sidewall portion 205 extends in the axial direction (x).

Meanwhile, the cell housing 200 may have a bottom portion 220 (which may also be denoted closed portion) formed on the opposite side of the opening 210. A terminal 400 may be disposed on the bottom portion side. A through hole may be formed in the bottom portion 220 (e.g. in the center of the bottom portion 220). The terminal 400 may be installed in or fitted into the through hole. The bottom portion 220 may thus refer to the remaining structure at the closed end of the cell housing 200 which forms an end face opposite the opening 210 of the cell housing 200, and in which the through hole is formed for accommodating a terminal 400. The terminal 400 may be fixed to or installed on the bottom portion 220 with a terminal gasket 500 interposed between the terminal 400 and the bottom portion 220 so that the terminal 400 is electrically isolated from the cell housing 200. The terminal 400 may be connected to the first electrode of the electrode assembly 100 and may thus have a first polarity. The terminal 400 may be in the form of a rivet or rivet-like structure. The expression "rivet" or "rivet-like structure" may refer to a terminal 400 shape and fixation method in which a portion of the terminal 400 is plastically deformed or upset to mechanically engage the inner surface of the bottom portion 220 while being electrically isolated therefrom by means of an interposed terminal gasket 500. In this way, the rivet or rivet-like structure enables the terminal 400 to be securely fixed to the cell housing 200 while maintaining electrical insulation from it. Notably, the disclosure is not limited to the terminal structure of the terminal 400 exemplified in FIG. 2, and other terminal structures may be used as long as they are electrically isolated from the cell housing 200, so that cell housing 200 and terminal 400 can have different polarities. The terminal 400 is electrically connected to the first uncoated portion 112a of the first electrode.

The bottom portion 220 and the sidewall portion 205 may be manufactured by molding a metal sheet plated with nickel on the surface of steel by a deep drawing process, and trimming the front end of the sidewall portion 205 with a punch while gripping it with a blank holder. Of course, the material of the cell housing 200 is not limited thereto. The material of the cell housing 200 may be a conductive metal, such as aluminum, steel, stainless steel, or the like, but is not limited thereto.

An insulator 700 may be interposed between the positive electrode current collector plate 600 and the bottom portion 220 of the cell housing 200 to electrically insulate the positive electrode current collector plate 600 and the bottom portion 220. The positive electrode current collector plate 600 and the terminal 400 may be bonded, for example, by resistance welding, ultrasonic welding, or laser welding, so that the terminal 400 may be connected to the first electrode of the electrode assembly 100.

A can lid 300 may be coupled to the opening 210 of the cell housing 200. The opening 210 may also referred to as an open end of the cell housing 200. The can lid 300 may cover the opening 210. The can lid 300 may cover the electrode assembly 100. The can lid 300 may be forcibly fitted into the opening 210.

The installation of the can lid 300 may completed by bonding the sidewall portion 205 of the cell housing 200 and the edge of the can lid 300 so that the cell housing 200 and the can lid 300 are electrically connected while the electrode assembly 100 is accommodated inside the cell housing 200. The can lid 300 may seal the opening 210 of the cell housing 200 after its installation. The bonding of the sidewall portion 205 of the cell housing 200 and the edge of the can lid 300 may be performed, for example, by welding, brazing, or soldering.

The can lid 300 may have a disk shape to cover the opening 210 of the cell housing 200. In general, the can lid 300 may have a substantially planar, circular structure, that may match the outer periphery of the sidewall portion 205 of the cell housing 200. The can lid 300 may have a radial extent significantly greater than its height in the axial direction of the cell housing 200, thereby defining the general form of a disk. Put different, the can lid 300 substantially planar, circular shape that extends mainly in the y-z plane, while some structural features of the can lid 300 may extend in the axial direction (x-direction) as will be outlined in more detail below. The can lid 300 may be pressed into the opening 210 of the cell housing 200 as part of the battery assembly process.

The can lid 300 may be coupled to the cell housing 200 using butt welding. Therefore, the battery cell 10 may have a larger internal volume for the same external shape than a battery cell 10 using the beading and crimping method. Accordingly, the internal volume of the cell housing 200 that is available for accommodating the electrode assembly 100 may be increased compared to a battery cell 10 sealed by beading and crimping. Therefore, energy density of the battery cell 10 may be increased while maintaining the same external dimensions.

The can lid 300 may be electrically connected to the cell housing 200. The second uncoated portion of the electrode assembly 100 accommodated inside the cell housing 200 may face the opening 210 of the cell housing 200. Therefore, the can lid 300 may be connected to the second electrode of the electrode assembly 100. For example, the can lid 300 may be directly bonded to the (flat) contact surface provided by the second uncoated portion 112b of the electrode assembly 100. As a result, the can lid 300 may have a second polarity. Since the cell housing 200 is electrically connected to the can lid 300, the cell housing 200 will also have the second polarity. In this way, the bottom portion 220 and the sidewall portion 205 of the cell housing 200 both have the second polarity. The bottom portion 220 of the cell housing 200 may be thus used as a terminal of the battery cell 10, so that both terminals of the battery cell 10 are provided on the same end face of the cell housing.

Both, a positive terminal and a negative terminal can thus be disposed at one axial end of the battery cell 10, for example, at the bottom of the battery cell 10. Therefore, the battery cell 10 according to the present disclosure may simplify the electrical connection structure. When electrically connecting a plurality of battery cells 10, the bus bar structure may be implemented on only one side of the battery module, thereby simplifying module design and assembly. All busbars connected to the terminals of both polarities may be positioned at the axial end of the cell housing 200. Therefore, the battery cell 10 according to the present disclosure may simplify the electrical connection structure by connecting both the positive electrode and the negative electrode in one direction when electrically connecting a plurality of battery cells 10. Additionally, since the battery cell 10 according to the present disclosure has a structure in which most of the bottom portion 220 of the cell housing 200 may be used as a terminal of the second polarity, a sufficient area for welding components for electrical connection can be provided.

The battery cell 10 may be a cylindrical secondary battery. The battery cell 10 may have, for example, a form factor ratio (ratio of diameter to height) greater than approximately 0.4. Preferably, the diameter of the battery cell 10 may be 40 mm to 50 mm, and the height may be 60 mm to 130 mm. The form factor of the battery cell 10 may be, for example, 46110, 4875, 48110, 4880, or 4680.

In the exemplary implementation illustrated in FIGS. 1 and 2, the terminal 400 functions as the positive terminal, while the bottom portion 220 of the cell housing 200 (or, in more general, the cell housing 200 and the can lid 300) may serve as the negative terminal. It should be understood, however, that this configuration is merely illustrative. In other embodiments of the present disclosure, the polarity of the terminals may be reversed.

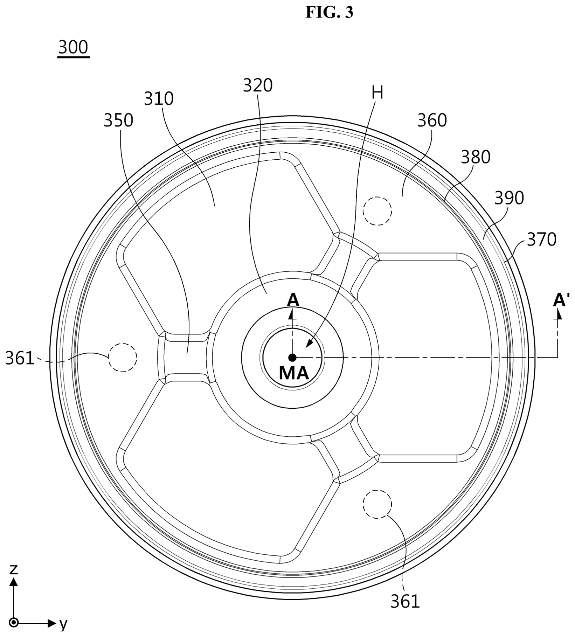

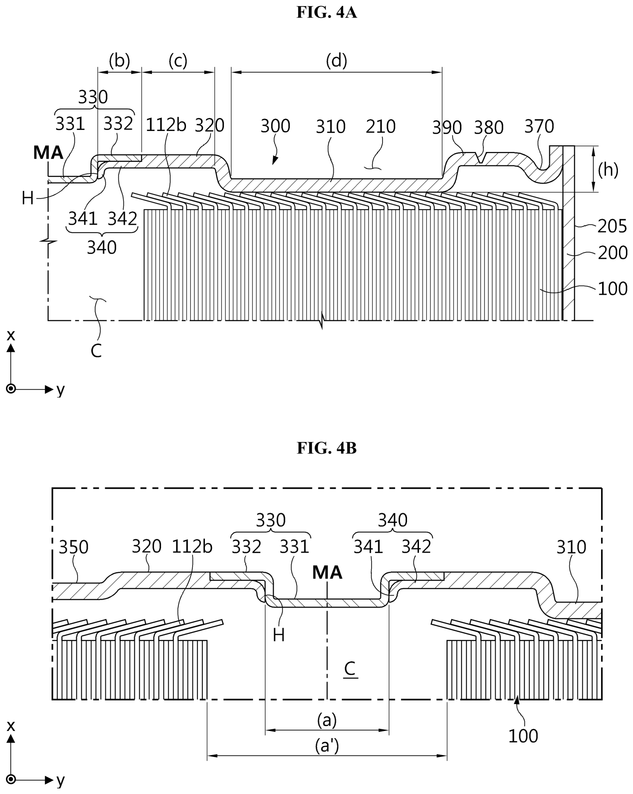

FIG. 3 is a plan view of a can lid 300 according to an aspect of the present disclosure. FIG. 4A is a side cross-sectional view taken along section line A-A' in FIG. 3. FIG. 4B is a side cross-sectional view showing, in an enlarged manner, a region around an injection port H of a battery cell according to an aspect of the present disclosure.

Referring to FIGS. 3, 4A, 4B, and 5, a can lid 300 according to an exemplary embodiment of the present disclosure is shown. The can lid 300 according to an embodiment of the present disclosure may include an edge portion 370 formed at an outer circumferential edge. The edge portion 370 of the can lid 300 is configured to be coupled to the sidewall portion 205 of the cell housing 200. The edge portion 370 may encompass the entire outer periphery of the can lid 300. In addition, the can lid 300 may also include one or more electrode coupling portions that are to be coupled to the electrode assembly 100 of the battery cell 10. The one or more electrode coupling portions may be formed as one or more recessed regions or structures provided in the can lid 300..

The can lid 300 is dimensioned to cover the opening 210 of the cell housing 200. The can lid 300 may be pressed into the opening 210 of the cell housing 200, thereby engaging with the inner surface of the sidewall portion 205 of the cell housing 200 through an interference fit. Thereafter, in a cap bonding step, the edge portion 370 of the can lid 300 - e.g. the peripheral edge of the can lid 300 - may be bonded to a sidewall portion 205 of the cell housing 200 to be electrically connected and may be sealingly fixed. The can lid 300 and the cell housing 200 may be bonded by various bonding methods, such as welding, brazing, and soldering, which may allow them to be electrically connected and sealingly bonded. The can lid 300 and the cell housing 200 may be preferably bonded by laser welding.

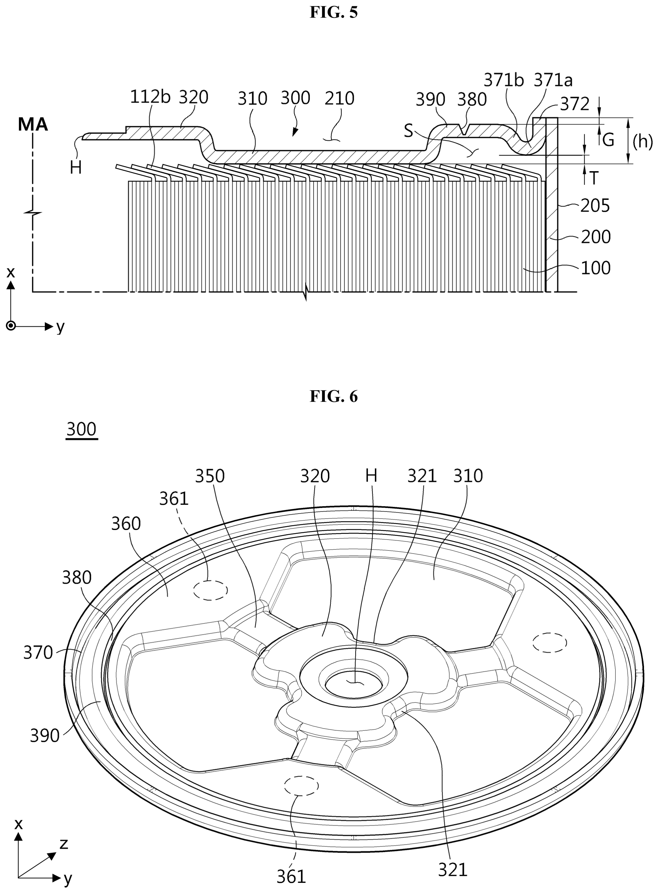

The can lid 300's edge portion 370 may be is specifically configured to enable press-fit insertion into the cell housing 200. This press-fit capability may facilitate a gap-free mechanical engagement with the inner circumferential surface of the cell housing 200, thereby enhancing assembly precision and weld quality while the need for tack welding may also be eliminated in some implementations. To achieve this functionality, the edge portion 370 of the can lid 300 may be formed with a profiled geometry adapted to engage the inner surface of the cell housing 200, e.g. the edge portion 370 may have a curved or contoured shape (e.g. may be U-shaped). The edge portion 370 of the can lid 300 may be located at and may form the outer radial perimeter of the can lid 300. As shown in more detail in FIG. 5, the edge portion 370 may include a mating portion 372 having a mating surface, a curved portion 371a, and an inclined portion 371b from a radially outer side to a radially inner side of the edge portion 370. The mating portion 372, the curved portion 371a, and the inclined portion 371b may form a U-shaped portion. The mating portion 372 may form an end of the edge portion 370 and provides the mating surface that faces outwardly in the axial outward direction. The mating portion 372 may extend in the axial direction (x-direction), so as to be substantially in parallel with an inner surface of the sidewall portion 205 of the cell housing 200.

Still referring to FIGS. 3, 4A, 4B, and 5, the can lid 300 according to an embodiment of the present disclosure may include an injection port H, a flat portion 320, an edge portion 370, and a plurality of electrode coupling portions 310.

The injection port H may be configured to facilitate electrolyte injection. The injection port H may be positioned approximately in the center (MA) of the can lid 300. The injection port H may be a circularly shaped void or opening formed in the can lid 300, which may be sealed by a plug after electrolyte injection. The plug 300 may be press-fitted, welded, or otherwise bonded to ensure sealing integrity.

The flat portion 320 of the can lid 300 may surround the injection port H. The flat portion 320 may surround the injection port H in the circumferential direction. The flat portion 320 may have a generally planar, ring shape. The flat portion 320 may have a seating portion 342 that may serve as a seating surface for a sealing plug 330 or for forming a weld. As illustrated in FIG. 4A, the flat portion 320 has an upper surface oriented away from the electrode assembly 100, which is positioned at a higher level (measured in the x-direction) than the upper surface of the electrode coupling portion 310, likewise facing away from the electrode assembly 100.

The edge portion 370 may be formed on the peripheral edge of the can lid 300. The edge portion 370 of the can lid 300 is configured to be coupled to the cell housing 200. The edge portion 370 may be coupled to an opening 210 formed on one side of the cell housing 200 in a force-fitting manner, as described herein below in further detail. The edge portion 370 may be coupled to the cell housing 200 by butt welding after being fitted into one side of the cell housing 200, i.e. into the open end of the cell housing 200. The cross-section of the edge portion 370 may be approximately U-shaped.

The lower end of the edge portion 370 is positioned at close proximity, but spaced apart, from the electrode assembly 100. In particular, a separation distance T is maintained in the axial direction (x) between the lower end of the edge portion 370 and the upper end of the electrode assembly 100, for example at the contact surface defined by the second uncoated portion 112b. In some example implementation, the edge portion 370 may have a U-shaped portion to enhance weldability during seam welding. This shape of the edge portion 370 has an important influence on weldability and thus should be considered first.

At the same time, it is also important to ensure that the design of the can lid 300 does not affect the internal structures of the battery cell 10, such as the electrode assembly 100. If the edge portion 370 of the can lid 300 is in contact with the electrode assembly 100 the electrode assembly 100 may be physically affected. For example, the absence of the separation distance T may result in direct mechanical contact, which could lead to deformation or stress transfer to the electrode assembly 100 during welding. Moreover, direct conduction of welding heat from the can lid 300 to the electrode assembly 100 may result in internal damage to the battery cell 10.

The axially lower end of the edge portion 370 of the can lid 300 faces the electrode assembly 100, and the axially upper end of the electrode assembly 100 and the axially lower end of the edge portion 370 are spaced apart by a separation distance T to minimize the influence of the can lid 300's design on other components the inside the battery cell 10. This axial separation provides thermal and mechanical decoupling between the welded region of the can lid 300 and the uncoated region 112b of the second electrode of the electrode assembly 100. Through this separation distance T, welding heat during seam welding may be prevented from being directly conducted to the electrode assembly 100, thereby avoiding thermal damage to the electrode assembly 100. Furthermore, since the edge portion 370 and the electrode assembly 100 are not in physical contact with each other in the welding region, there is no impact on the electrode assembly 100, particularly the second uncoated portion 112b thereof, which may prevent cracking or kinking in the second uncoated portion.

As shown in FIG. 5, the edge portion 370 of the can lid 300 may include a mating portion 372, a curved portion 371a, and an inclined portion 371b from a radially outer side to an inner side. The mating portion 372, the curved portion 371a, and the inclined portion 371b together may define an approximately U-shape.

The mating portion 372 is provided on the radially outer end of the can lid 300, and extends axially (i.e. in the axial direction (x)) so that the outer circumferential surface of the mating portion 372 contacts the inner circumferential surface of the sidewall portion 205 of the cell housing 200. The outer circumferential surfaces of the mating portion 372 and the inner circumferential surface of the sidewall portion 205 of the cell housing 200 may extend in the axial direction (x) and the circumferential direction. The axially outward-facing surface of the mating portion 372 forms a mating surface. After installing the can lid 300 into the cell housing 200, the mating surface may be at level (in the y-z plane) with the axially outward facing surface of the sidewall portion 205 of the cell housing 200. The curved portion 371a is connected to the axially inner end (lower end) of the mating portion 372 of the can lid 300mating portion 372, and has a downwardly convex cross-sectional shape that extends inward radially toward the inner side axially. The curvature of the curved portion 371a may decrease progressively, such that the slope becomes more gradual as it extends away from the mating portion 372. The curved portion 371a may thus extend from the axially inner end of the mating portion 372 and form a downwardly convex arc that transitions smoothly in both the radial and axial directions toward the center of the cell lid. Since the mating portion 372 extends axially in a direction parallel to the cell housing 200 wall, the curved portion 371a adjoining the mating portion's lower (axially inner) end exhibits a gradually decreasing tangent slope from about 90 degrees as it curves inward. Thus, the slope of the tangent line of the outer circumferential surface of the curved portion 371a may gradually decrease from 90 degrees as it moves away from the mating portion 372. This curved portion 371a merges smoothly into the inclined portion 371b, so that the inclined portion 371b continues from the curved portion 371a. The inclined portion 371b extends outward axially (in the axial direction) and inward in the radial direction at a substantially constant angle. Hence, the slope of the inclined portion 371b may be constant. The U-shaped can lid 300 having a U-shape edge portion 370 is thus suitable for being pressed into the opening 210 of the cell housing 200.

This U-shaped edge structure of the can lid 300 may facilitate elastic deformation (or, depending on design, elastic and plastic deformation), thereby enabling secure press-fit engagement with the inner wall of the cell housing 200. The curved portion 371a and the inclined portion 371b provide a cross-sectional profile that allows the can lid 300 to be deformed radially inward (i.e. in the radial direction (y)). Accordingly, when the can lid 300 is pressed into the opening 210, the can lid 300 may be fitted into the opening 210 of the cell housing 200 as the U-shaped edge portion 370 is compressed during insertion. Subsequently, the U-shaped edge portion 370 may be allowed to expand to its original shape (to the maximum extent) without causing deformation of other parts. The edge portion 370 thus provides the elastic compliance of the connection, with the curved portion 371a and inclined portion 371b acting as a spring element of low stiffness. This applies in particular to the elastic component of the deformation, in cases where the edge portion 370 undergoes both elastic and plastic deformation. Thus, the sidewall portion 205 of the cell housing 200 may remain substantially dimensionally stable. As a result, a radial adhesion/frictional engagement between the sidewall portion 205 of the cell housing 200 and the circumferential contact surface of the mating portion 372 may be achieved. In other words, the contact surface of the mating portion 372 may be firmly pressed against the inner surface of the cell housing 200 without distortion during the process of pressing the can lid 300 into the opening 210 of the cell housing 200.

In this way, the can lid 300 may be press-fitted into the inner circumferential surface of the sidewall portion 205 of the cell housing 200, thereby preventing or at least minimizing the formation of any gaps between the sidewall portion 205 of the cell housing 200 and the edge of the can lid 300. Assembly efficiency and productivity may be enhanced through pressure insertion of the can lid 300. The edge of the can lid 300 may be directly butt welded to the inner circumferential surface of the cell housing 200. There is thus no need for tack welding. This close engagement also prevents the welding laser from entering the internal space of the cell housing 200, thereby avoiding damage to the electrode assembly 100. Moreover, there is no concern about the thinning at the welded portion, and sufficient weld strength may be reliably ensured.

The mating portion 372 of the can lid 300 may be longer than 0.7 mm (in the axial direction (x)). The mating portion 372 may thus have an axial length of at least 0.7 mm to ensure reliable engagement with the sidewall portion 205 of the cell housing 200.

The can lid 300 may also include one or more electrode coupling portions 310 configured to be coupled to the electrode assembly 100. The one or more electrode coupling portions 310 may be coupled to the second uncoated portion 112b of the electrode assembly 100 by welding. The bottom surface(s) (i.e. the surface(s) facing the electrode assembly 100) of the one or more electrode coupling portions 310 may be coupled to the electrode assembly 100 in a face-to-face manner. The second uncoated portion 112b of the second electrode is directly connected to the electrode coupling portion 310 of the can lid 300. The bottom surface of the electrode coupling portion 310 may be coupled to the uncoated portion or foil tabs of one of the electrodes of the electrode assembly 100.

The one or more electrode coupling portions 310 may be disposed between the flat portion 320 and the edge portion 370 of the can lid 300. In other words, the flat portion 320, the one or more electrode coupling portions 310, and the edge portion 370 may be sequentially provided in the can lid 300 along the radial direction. The one or more electrode coupling portions 310 may be regions of the can lid 300 extending in the radial direction and circumferential direction. The plurality of electrode coupling portions 310 may be spaced apart from each other, for example, in the circumferential direction.

Each of the plurality of electrode coupling portions 310 may have a recessed shape. The electrode coupling portions 310 may be recessed in an axial direction toward the lower end of the edge portion 370. Specifically, the electrode coupling portions 310 may be recessed in an axial direction toward the electrode assembly 100, relative to an upper surface of the flat portion 320 oriented away from the electrode assembly 100 and/or relative to an upper surface of a support portion 390 oriented away from the electrode assembly 100. The bottom surface of the electrode coupling portions 310 facing the electrode assembly 100 may be provided closer to the electrode assembly 100 than the remaining bottom surface of the other portions of the can lid 300. For example, the recessed regions defining the electrode coupling portions 310 may extend - in the axial direction - beyond the lower end of the curved portion 371a of the edge portion 370, thereby ensuring physical separation of the lower end of the curved portion 371a of the edge portion 370 from the upper end of the electrode assembly 100. The electrode coupling portions 310 may be coupled to the electrode assembly 100, whereas the remaining portions of the can lid 300 excluding the electrode coupling portions 310 may be spaced away from the electrode assembly 100.

The plurality of electrode coupling portions 310 may be spaced apart from each other in the circumferential direction, such that the flatness of the electrode coupling portions 310 relative to the electrode assembly 100 may be stably ensured. The formation of the coupling portions 310 may improve the welding quality between the can lid 300 and the electrode assembly 100.

The individual electrode coupling portions 310 may have a flat bottom surface that extends in the radial direction. The bottom surface may be a flat surface that faces the electrode assembly 100 when installing the can lid 300 into the opening 210 of the cell housing 200. The height (h) of the bottom surface of the electrode coupling portion 310 may be greater than the height of the lower end of the curved portion 371a (see FIG. 5). The heights may be measured in the axial direction (x) relative to the axially most outward upper end of the can lid 300 (which may be, for example, the axially upper end of the mating portion 372 forming the mating surface as shown in FIGS. 5 and 6). Accordingly, the electrode coupling portion 310 may protrude further axially inward towards the inside of the cell housing 200 than the curved portion 371a of the edge portion 370 of the can lid 300. Further, the lower end of the curved portion 371a may be spaced apart from the electrode assembly 100 accommodated inside the cell housing 200 by a separation distance T in the axial direction, while the bottom surface of the electrode coupling portion 310 may be in close contact with the electrode assembly 100. Accordingly, the coupling process between the electrode coupling portion 310 and the electrode assembly 100 may be smoothly performed: This structural configuration may enable a reliable and thermally decoupled connection between the electrode coupling portion 310 and the electrode assembly 100.

Since the can lid 300 can be coupled to the cell housing 200 to cover the opening 210 of the cell housing 200 and is electrically connected to the electrode assembly 100, a separate negative electrode current collector plate - such as a negative electrode current collector plate used in in conventional solutions - is not required. The can lid 300 according to the present disclosure may serve as a so-called "integrated can lid 300" functioning both as a current collector plate and as sealing member (or cap) for the cell housing 200.

The can lid 300 may be electrically connected to the cell housing 200, in particular, through a coupling portion of the mating portion 372 (e.g. at its circumferential contact surface) of the edge portion 370 of the can lid 300 and the inner circumferential surface of the sidewall portion 205 of the cell housing 200. The can lid 300 may be laser welded to the cell housing 200, and the electrode coupling portion 310 of the can lid 300 may be bonded to the second uncoated portion 112b of the electrode assembly 100, for example, by laser welding. Moreover, the can lid 300 may serve also as a negative electrode current collector plate.

According to the above described embodiments of the present disclosure, a bonding connection between the can lid 300 and the cell housing 200 can be simplified. Furthermore, there is no need to use a (separate) current collector plate for electrically connecting the electrode assembly 100 to the can lid 300. This allows reducing the number of parts and assembly man-hours of the battery cell 10. Further the improved structure the can lid 300 may further increase the internal volume of the battery cell 10 that is available for accommodating the electrode assembly 100, thereby increasing the volumetric energy density of the battery cell 10.

As shown in FIGS. 3, 4A, 4B, and 5, the one or more electrode coupling portions 310 of the can lid 300 may extend radially between the flat portion 320 of the can lid 300 and the edge portion 370 of the can lid 300. Specifically, the electrode coupling portions 310 may extend radially from the flat portion 320 toward the edge portion 370. The length (d) of the electrode coupling portion(s) 310 may define a welding length (also referred to as a lid foil tab welding (LFW) length) of a welding region between the electrode coupling portion 310 and the uncoated portion 112b of the electrode assembly 100. The welding length (d) may be increased to enlarge the bonding area, thereby reducing the internal resistance of the battery cell 10.

As noted, in the example embodiment of FIG. 3, the cap lid 300 may have three electrode coupling portions 310. The plurality of electrode coupling portions 310 may form a common plane, thereby facilitating secure and stable flat contact with the electrode assembly 100. In more detail, the respective bottom surfaces - each facing the electrode assembly 100 - may be formed to lie within a common plane that extends perpendicular to the axial direction of the cell housing 200. This spatial configuration allows the electrode coupling portions 310 to establish uniform face-to-face contact with the corresponding uncoated regions 112b or foil tabs of the electrode assembly 100, thereby facilitating reliable and consistent bonding. The ability to maintain such flatness improves assembly precision and contributes to stable electrical performance.

In some example embodiments, the plurality of electrode coupling portions 310 may be disposed radially with respect to the center of the can lid 300. In the exemplary embodiment related to FIG. 3, the three coupling portions 310 are circumferentially spaced from one another by 120 degrees. It should be understood, however, that this configuration is not limiting. The can lid 300 may alternatively be provided with a different number of coupling portions 310, for example two, four, five, or six, which may be circumferentially arranged at equal angular intervals.

The one or more electrode coupling portions 310 may be formed by plastic processing so that corresponding one or more predetermined regions of the can lid 300 (which is provided in the form of a metal sheet) is recessed axially inward towards the electrode assembly 100. The bonding portions of the respective electrode coupling portions 310 and the electrode assembly 100 may extend in the radial direction.

The inner circumferential surface of the sidewall portion 205 and the circumferential contact surface of the mating portion 372 may be firmly pressed against each other for bonding.

The can lid 300 according to an embodiment of the present disclosure may further include at least one bridge portion 350. The can lid 300 may have plural bridge portions 350, e.g. three bridge portions 350 are shown in FIG. 3. Each bridge portion 350 may extend radially outward from the flat portion 320 of the can lid 300. Each bridge portion 350 may be formed in between two adjacent electrode coupling portions 310 thereby separating the electrode coupling portions 310 from one another. The one or more bridge portion 350 may extend from the flat portion 320 toward the edge portion 370. Alternatively, the one or more bridge portion 350 may extend from the flat portion 320 toward the picking portion to be described later.

The plurality of electrode coupling portions 310 may be partitioned and spaced apart by the one or more bridge portions 350. The one or more bridge portions 350 may formed in the can lid 300 to reinforce the rigidity of the can lid 300.

Meanwhile, the upper surface(s) of the one or more bridge portions 350 may be formed at a higher level than the upper surface of the electrode coupling portion 310, but lower than the upper surface of the flat portion 320. In other words, as indicated in FIG. 3, the upper surface(s) of the one or more bridge portions 350 may be positioned axially outward of the upper surface(s) of the coupling portions 310, but remain axially inward of the upper surface of the flat portion 320. The one or more bridge portions 350 may thus extend further away from the interior of the cell housing 200 than the one or more electrode coupling portions 310, while still being recessed relative to the flat portion 320. Likewise, as also indicated by FIG. 3, the upper surface(s) of the one or more bridge portions 350 may remain axially inward of the upper surface of the edge portion 370 and/or picking portion 360. The one or more bridge portions 350 may thus also be recessed relative to the edge portion 370 and/or picking portion 360. When the bridge portions 350 are formed in this way, the rigidity of the can lid 300 may be further strongly reinforced.

The plurality of electrode coupling portions 310 may be formed and disposed symmetrically relative to the center MA of the can lid 300. The central axis of the can lid 300 is at the center MA of the can lid 300. Each of the electrode coupling portions 310 may be formed in the same shape and may be arranged at equiangular angles with respect to the can lid 300. In this way, when the plurality of electrode coupling portions 310 are formed and disposed symmetrically, a secure and stable flat connection between the can lid 300 and the electrode assembly 100 may be realized, and the electrical stability of the battery cell 10 may also be improved. Such symmetrical formation and spacing of the electrode coupling portions 310 may therefore help to ensure consistent planar alignment with the electrode assembly 100, thereby contributing to improved electrical performance and manufacturing reliability.

As shown in FIG. 4B, the can lid 300 according to an embodiment of the present disclosure may further include a plug coupling portion 340. The plug coupling portion 340 may be formed correspond to an inner peripheral region of the flat portion 320 facing the injection hole H, or alternatively to the flat portion 320 of the can lid 300 itself. In particular, the plug coupling portion 340 may be formed as a circular annular collar or portion surrounding the injection hole H. A plug 330 may be inserted into and coupled to the plug coupling portion 340. The plug 330 may be configured to seal the injection port H. The plug 330 may be for example formed by deep drawing a thin metal sheet of 0.3 mm. If the metal sheet is too thin, molding is difficult and rigidity is insufficient. The total height of the plug 330 may be 1.5 mm to 1.7 mm. The plug 330 may have T-shaped cross section as shown in the example of Fig. 5 and may comprise a protrusion 331 mainly protruding in the axial direction and an extension portion 332 mainly extending from the protrusion 331 in the radial direction.

The plug coupling portion 340 may have an insertion portion 341 and a seating portion 342. The insertion portion 341 may define the inner periphery of the injection port H formed in the can lid 300. A plug 330 may be inserted into the insertion portion 341. The protrusion 331 of the plug 330 matching the inner diameter (a) of the injection port H so that the protrusion 331 can be inserted into the insertion portion 341 by force-fit or shape-fit or a combination thereof. For example, the protrusion 331 may be coupled to the insertion portion 341 in a force-fitting manner. The injection port H may be formed inside the insertion portion 341, and when the protrusion 331 of the plug 330 is inserted into the insertion portion 341, the injection port H may be sealed. Note that the inner diameter (a) of the injection port H is smaller than the diameter (a') of the core C of the electrode assembly 100.

The plug 330 may be seated on the seating portion 342 of the flat portion 320 of the can lid 300. The plug 330 may have an extension portion 332 that can be seated on the seating portion 342 when inserting the plug 330 into the injection hole H. The extension portion 332 may extend in the radial direction from the insertion portion 341. The extension portion 332 may be an annular flange portion (or collar) surrounding the central portion (protrusion 331) of the plug 330.

The seating portion 342 of the plug coupling portion 340 may be formed as a step in the plug coupling portion 340 so that the extension portion 332 of the plug 330 may be seated thereon. The stepped portion of the plug coupling portion 340 forming the seating portion 342 may be configured to receive and engage a corresponding lower surface of the extension portion 332 of the plug 330. The extension portion 332 of the plug 330 and the seating portion 342 may be bonded to each other, for example, by welding. The height of the seating portion 342 of the plug coupling portion 340 and the height of the extension portion 332 of the plug 330 may be selected such that their combined height is equal to or less than the height of the plug coupling portion 340 outside the seating portion 342 or of the flat portion 320 outside the seating portion 342. In this way, the outer surface of the plug 330 facing axially outward is flush with, or at least not higher than, the surrounding flat portion 320 after installation of the plug 330 in the can lid 300.

As described above, when the can lid 300 further includes the plug coupling portion 340, the coupling between the plug 330 and the can lid 300 may be improved, thereby ensuring a reliable sealing of the injection port H.

Furthermore, the insertion portion 341 of the can lid 300 for receiving the plug 330 may be located axially outward relative to the lower surfaces of the electrode coupling portions 310 that face the electrode assembly 100. Accordingly, the insertion portion 341 is positioned farther away from the electrode assembly 100 in the axial direction than the electrode coupling portions 310. This arrangement helps to prevent damage to the electrode assembly 100, as it reduces the risk of welding heat generated during welding of the plug 330 being transferred to the separator of the electrode assembly 100.

As shown in FIG. 4A, increasing the length (b) of the seating portion 342 of the plug coupling portion 340 enhances the weldability of the seating portion 342 and the extension portion 332 of the plug 330. The length (b) may be selected such that welding defects of the plug 330 caused by vaporization of the electrolyte are prevented. For example, the length (b) may be greater than or equal to 1 mm and less than or equal to 4 mm, such as 2 mm, 3 mm, or any value therebetween. Furthermore, the outer diameter of the seating portion 342 may be at least 3 mm larger than the diameter (a) of the injection hole H. In some embodiments, the outer diameter of the seating portion 342 is 4 mm, 5 mm, or a value in between. The seating portion 342 may be formed, for example, by forging.

As also shown in FIG. 4A, the length (b) may be considered the length of the plug coupling portion 340 in the radial direction of the can lid 300. The length (c) may denote the length of the flat portion 320 connecting to plug coupling portion 340. The length (b) may have an appropriate length to secure stable flatness of the can lid 300 around its center. For example, the length (c) may greater than or be equal to 3 mm and less than or equal to 5 mm, such as 4 mm or 5 mm or any valued therebetween. If the length (c) is less than 3 mm, it may be difficult to mold the flat portion 320.

The injection port H may be formed with a pipe portion created by piercing and burring. Alternatively, the injection port H may be a through hole into which the insertion portion 341 of the plug 330 is inserted.

FIG. 5 is another side cross-sectional view taken along section line A-A' of FIG. 3, which will be used to highlight further features of the can lid 300. The can lid 300 in FIG. 5 may, for example, correspond to the can lid 300 in FIG. 4.

Referring to FIG. 4B, the can lead 300 may be configured such that the core C and the center of the injection port H coincide with the central axis MA of the cell housing 200. Accordingly, the can lead 300 and the electrode assembly 100 may be arranged in a concentric structure with each other.

When the can lead 300 is configured as described above, uniform injection of the electrolyte can be achieved during electrolyte filling through the injection port H. In addition, when a welding rod is inserted through the injection port H into the core C, interference with the core C can be prevented, and such insertion can be easily and precisely carried out.

In FIGS. 4A, 4B and 5, the injection port H may be formed as a through hole in the center of the can lid 300 for injecting an electrolyte. The injection port H may also serve as a passage for a welding rod. For example, a current collector plate (e.g., a positive electrode current collector plate 600) and a rivet-shaped terminal 400 may be positioned at an axial location opposite the injection port H, but aligned with it in the radial direction within the battery cell 10. The welding rod may be inserted through the injection port H into the core C of the electrode assembly 100 to weld the current collector plate 600 and the terminal 400. Accordingly, it may be preferable that the diameter (a) of the injection port H is configured larger than the diameter of the welding rod in order to avoid interference with the welding rod. Additionally, the diameter (a) of the injection port H may be formed smaller than the diameter (a') of the core for stable injection of the electrolyte. If the diameter (a) of the injection port H is larger than the size of the core, any separator provided within the core C may loosen or come off when the electrolyte is injected at high pressure. The diameter of the injection port H taking this into account may be equal to or greater than 4.5 mm and less than or equal to 6.0 mm. For example, the diameter (a) of the injection port H is 5.0 mm or 5.5 mm.

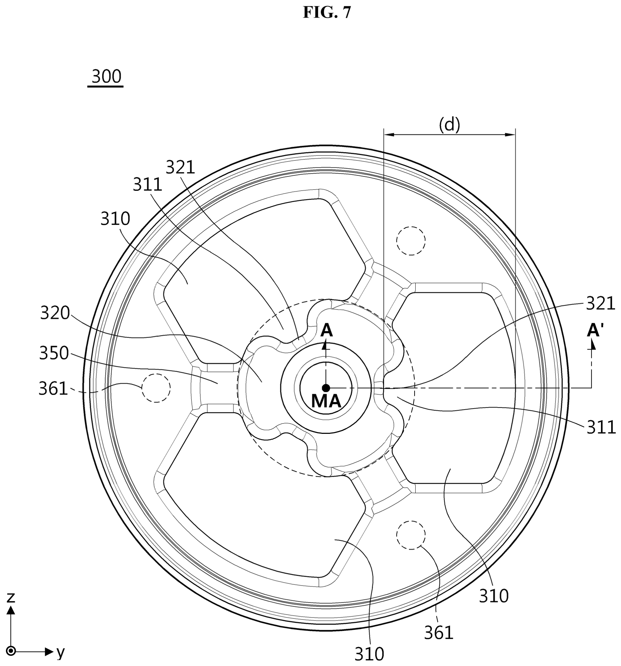

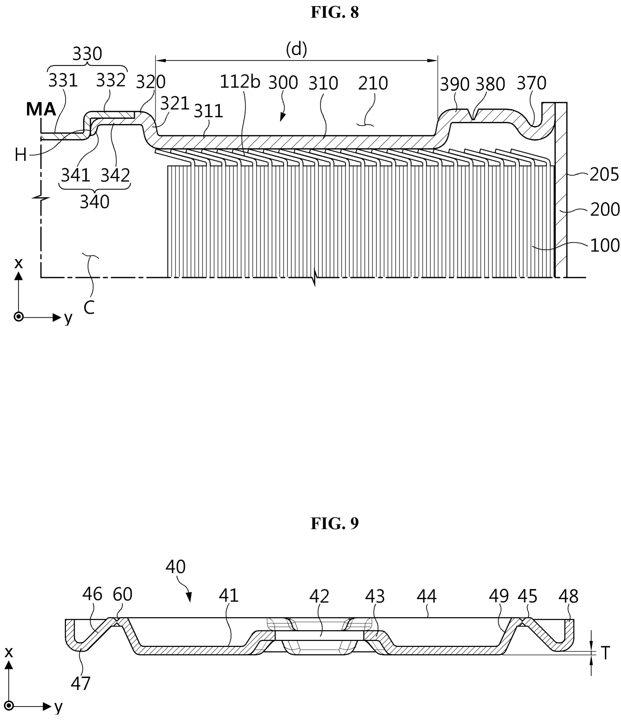

FIG. 6 is a perspective view of a can lid 300 according to another aspect of the present disclosure. FIG. 7 is a plan view of a can lid 300 according to an aspect of the present disclosure. FIG. 8 is a side cross-sectional view taken along section line A-A' in FIG. 7.

Referring to FIGS. 6 to 8, a can lid 300 according to this aspect of the present disclosure differs from the implementation example in FIGS. 3, 4A, 4B, and 5 in that a bent portions 321 are provided in the flat portion 320, and each of electrode coupling portions 310 may have an extended portion 311 that extends into a respective one of the bent portions 321. FIGS. 6 to 8 illustrate an embodiment in which three bent portions 321 and three corresponding extended portions 311 are provided. However, this disclosure is not limited to this example. As noted above, the can lid 300 may alternatively include 2, 4, 5, or 6 electrode coupling portions 310, with a corresponding number of bent portions 321 and extended portions 311.

As best seen in FIG. 7, a bent portion 321 may be formed by a radial recess section of the flat portion 320 projecting toward the injection port H in the radial direction (y). The extended portion 311 of each electrode coupling portion 310 may be formed by extending the respective electrode coupling portions 310 radially toward the bent portion 321. The extended portion 311 may further project toward the injection port H by an amount corresponding to the radial depth of the bent portion 321. In this example, the flat portion 320 is not formed into an annulus shape any longer, but, in plan view, may instead have the shape of a clover leaf (e.g., a three-leaf clover), with the bent portions 321 defining the "leaves" of the flat portion 320.

In this way, when providing the flat portion 320 with the bent portions 321 and the electrode coupling portions 310 have extended portions 311 as exemplified in FIGS. 6 to 8, the length (d), which constitutes the welding length between the electrode coupling portion 310 and the electrode assembly 100, may be further increased to enlarge the bonding area. This may further reduce the internal resistance of the battery cell 10. For example, in case the can lid 300 does not have bent portions 321 and extended portions 311, such as the can lid 300 described in connection with FIG. 3, 4A, 4B and 5, the length (d) may be approximately 9 mm. In case the can lid 300 has bent portions 321 and extended portions 311 as shown in FIGS. 6 to 8, the length (d) may be longer, approximately12 mm.

Additionally, the length (c) in the remaining part of the flat portion 320 excluding the bent portions 321 may be maintained like in the embodiment in FIGS. 3, 4A, 4B, and 5. Moreover, the length (a) and/or the length (b) described in connection with the embodiment of FIGS. 3, 4A, 4B, and 5 may be also maintained in the embodiment described in connection with FIGS. 6 to 8. Furthermore, the embodiment described in connection with FIGS. 6 to 8 may further improve rigidity of the can lid 300. As noted above, as the increased length (d) may further reduce the internal resistance of the battery cell 10, the width (in the circumferential direction) of the electrode coupling portion 310 may be reduced. This may facilitate the formation of the picking portions 360 to be described later.

When the length (a), length (b), length (c), and length (d) are designed as described above, various dimensions of the can lid 300, such as the welding flatness and welding length of the can lid 300, and the diameter of the injection port H, may be aligned.

Referring to FIGS. 2 to 8, the can lid 300 according to the present disclosure may optionally further include one or more vent notch portions 380. The one or more vent notch portions 380 of the can lid 300 may be provided radially further outward than the one or more electrode coupling portions 310. For example, the one or more vent notch portions 380 may be formed between the one or more electrode coupling portions 310 and the edge portion 370.

As shown in FIGS. 4A and 8, the vent notch portion(s) 380 may be formed at a radial position of the can lid 300 located between the edge portion 370 and the electrode coupling portions 310. Each vent notch portion 380 may extend in the circumferential direction at this radial location. A vent notch portion 380 may have a closed loop shape, in particular a circular shape. The vent notch portion(s) 380 may serve as a pressure relief valve. The vent notch portion(s) 380 may be ruptured by the internal pressure of high-temperature venting gas when a thermal event occurs in the battery cell 10. Accordingly, the venting gas may be discharged from the battery cell 10 to the outside.

The vent notch portion(s) 380 may have one or more grooves or notches in the upper surface of the can lid 300. These grooves or notches may be formed by notching the can lid 300 along the circumferential direction at a position radially inward of the edge portion 370 of the can lid 300. For example, a vent notch portion 380 may have a groove or notch that is formed by (unidirectional) notching only on one surface of the can lid 300. In some implementations, the venting grooves or notches formed in the vent notch portion(s) of the can lid 300 may span the entire circumference of the can lid 300 as a continuous circular groove or notch. Alternatively, individual vent notch portions 380 may span only a portion of the circumference, such that multiple discrete notched grooves are distributed along the circumferential direction at the same radial position.

The rupture pressure of the cell housing 200 may be controlled by controlling the depth and width of the grooves formed in the one or more vent notch portions 380. For example, the vent notch portion(s) 380 may be configured to be ruptured when the pressure inside the cell housing 200 is in the range of 15 to 35 kgf/cm² (1,471 to 3,432 kPa). As noted, the groove(s) of the one or more vent notch portions 380 may be formed by notching the can lid 300 thereby partially reducing the thickness of the can lid 300. The one or more vent notch portions 380 may have a thickness gradient. The thickness gradient means that when the cross-section of the vent notch portion(s) 380 is checked, it is formed to be inclined at a certain angle relative to a predetermined horizontal plane. This vent notch portion(s) 380 is ruptured when the pressure inside the cell housing 200 rises abnormally, so that all the internal gas is discharged to the outside. The term thickness gradient may thus refer to a configuration in which the cross-section of a vent notch portion(s) 380 is inclined at a defined angle relative to a predetermined horizontal reference plane (e.g. the plane corresponding to the upper surface of the radial region of the can lid 300 in which the one or more vent notch portion(s) 380 are formed). In a cross-section perpendicular to the can lid 300, a groove formed in the one or more vent notch portions 380 may have a V-shaped or U-shaped cross-section. This inclined profile of the grooves facilitates controlled rupture of the vent notch portion(s) 380 when the internal pressure of the cell housing 200 rises abnormally, thereby allowing the complete discharge of gas from the interior of the battery cell 10 to the outside.

The thickness of the can lid 300 in the axial direction may be greater than or equal to 0.4 mm and less than or equal to 0.8 mm, such as 0.6 mm or 0.7 mm, or any value therebetween.

For a 4680 battery cell 10, when the thickness of the sidewall portion 205 is considered and the one-sided press-fit interference is designed to be in the range of 100 µm to 130 µm, such as about 110 µm or 120 µm, or any value therebetween. The diameter of the can lid 300 may be 45.2 mm.

The one or more vent notch portions 380 may form corresponding one or more continuous or discontinuous circular patterns, linear patterns, or other patterns on the axially outer surface of the can lid 300. For example, a vent notch portion(s) 380 may be formed in a roughly circular ring shape having a certain width. This circular ring-shaped vent notch portion(s) 380 may have the same center as the center (MA) of the can lid 300 and may correspond to a given radial location of the can lid 300.

When the one or more vent notch portions 380 are formed on the can lid 300, the venting gas may be easily discharged from the battery cell 10. Since the one or more vent notch portions 380 are provided in the can lid 300 and does not occupy a separate space, no internal volume for implementing this safety feature in the battery cell 10 is required, which may allow further maximizing the volume of the electrode assembly 100 to increase the volumetric energy density of the battery cell 10.

In general, the can lid 300 according to the present disclosure may be integrally formed, for example, from conductive material. The can lid 300 may have a disk shape. The can lid 300 may be for example a disk-shaped metal sheet. The metal sheet may include a plating layer on each of its two surfaces. For example, the can lid 300 may be made of nickel-plated steel (NPS).

In case the can lid 300 is made of NPS, there is a concern about peeling of nickel plating during notching process. However, when the one or more vent notch portions 380 are formed unidirectionally on the upper part of the can lid 300, there is no concern about foreign substances being moved toward the electrode assembly 100.

If the steel substrate beneath the nickel plating becomes exposed due to the notching process, it may lead to corrosion-related issues, such as the generation of fluoride compounds upon contact with the electrolyte. However, when the groove(s) of one or more vent notch portions 380 are formed on the side/surface of the can lid 300 that does not face the electrode assembly 100 direct contact of the steel with the electrolyte can be avoided, thereby eliminating the risk of corrosion.

Conversely, if the groove(s) is/are formed on the side of the can lid 300 that faces the electrode assembly 100, there is a risk that the notched portion may be damaged due to mechanical stress caused by expansion and contraction of the electrode assembly 100 during activation and repeated charging and discharging cycles. In contrast, when the one or more vent notch portions 380 are formed on the side of the can lid 300 that does not face the electrode assembly 100 such mechanical interaction is avoided, thereby fundamentally preventing damage to the one or more vent notch portions 380.

By forming the one or more vent notch portions 380 on the outer side of the can lid 300 facing away from the electrode assembly 100, corrosion of the can lid 300 or contact with the electrode assembly 100 may be avoided.

The one or more vent notch portions 380 of the can lid 300 may be provided radially further outward than the one or more electrode coupling portions 310.

For example, the one or more vent notch portions 380 may be formed between the one or more electrode coupling portions 310 and the edge portion 370.

The one or more electrode coupling portions 310 may be formed by recessed portions. Accordingly, the one or more vent notch portions 380 may be formed in an upper surface part of the can lid 300 that is axially elevated from the electrode assembly 100 relative to the one or more electrode coupling portions 310. As shown in FIG. 6, a space S may be provided between the electrode assembly 100 and the lower surface of the can lip in the region where the one or more vent notch portions 380 are formed, so that gas may gather in this space S. When the gas pressure in this space S exceeds a predetermined value, the vent notch portion(s) 380 may rupture, thereby releasing the gas to the outside of the battery cell 10. Conversely, if the vent notch portion(s) 380 were located in a recessed area closer to the electrode assembly 100, gas accumulation beneath the can lid 300 in the region of the vent notch portion(s) 380 may be impeded, making timely rupture of the vent notch portion(s) 380 more difficult to achieve.

In another embodiment of the present disclosure, the can lid 300 may further include a support portion 390 between the inclined portion 371b of the edge portion 370 and the one or more electrode coupling portions 310. The support portion 390 may provide a flat surface at its axially outer side. The one or more vent notch portions 380 may be formed on this support portion 390. The one or more electrode coupling portions 310 may be connected to the radially inner side of the support portion 390 and are recessed toward the inner side of the cell housing 200.

A support portion 390 extending horizontally in the radial direction may be provided radially further inward than the curved portion 371a in the can lid 300. The support portion 390 is connected to the radially inner end of the inclined portion 371b and may extend radially inward from the connection part. The support portion 390 provides a flat outer surface between the inclined portion 371b and the electrode coupling portion 310. The surface of the support portion 390 may have a flat ring shape.

The one or more vent notch portions 380 provided in the support portion 390 will not be deformed by the force applied when the can lid 300 is pressed into the cell housing 200, but rapture only when the internal pressure increases rapidly, for example, due to a short circuit or the like occurring inside the cell housing 200, so that the electrode coupling portions 310 of the can lid 300 and the mating portion 372 of the can lid 300 may be separated from each other. Accordingly, the electrode coupling portions 310 connected to the electrode assembly 100 and the cell housing 200 are electrically disconnected, and the internal space of the cell housing 200 is opened to the outside, which discharges the gas causing the internal pressure.

The axially outer surface of the support portion 390 may be disposed axially further inward than the axial outer end of the mating portion 372, i.e. the mating surface. That is, the height of the axial outer surface of the support portion 390 may be positioned lower than the height of the axial outer end of the mating portion 372. As indicated in FIG. 5, a gap G is formed between the upper surface of the mating portion 372 and the upper surface of the support portion 390. Accordingly, when the battery cell 10 is placed on the floor, the one or more vent notch portions 380 provided in the support portion 390 may not directly touch the floor, thereby protecting the one or more vent notch portions 380.

The integrated-type can lid 300 according to the present disclosure may have a notch thickness of the vent notch portion(s) 380 that is comparable to that of the conventional can lid 300 designs employing a separate-type structure. This offers the advantage of maintaining good formability of the vent notch portion(s) 380 and achieving a relatively low venting pressure. A lower venting pressure contributes to improved safety by enabling earlier pressure relief during abnormal conditions.

The integrated-type can lid 300 according to the present disclosure may have total height h of the can lid 300 may be 1.0 mm to 3.0 mm only. When the total height h of the can lead 300 is less than 1.0 mm, a peripheral portion of the electrode coupling portion 310 may not be reliably spaced apart from the electrode assembly 100. When the total height h of the can lead 300 exceeds 3.0 mm, the volume occupied by the can lead 300 increases, which may reduce the energy density of the battery cell 10. Thus, the integrated-type can lid 300 occupies only a minimal space of the internal volume of the cell housing 200 and the relatively larger internal volume of the cell housing 200 may be filled with the electrode assembly 100.

Referring to FIGS. 2 to 8 again, the can lid 300 of the present disclosure may optionally further include one or more picking portions 360.

A picking portion 360 of the can lid 300 may be disposed between two adjacent electrode coupling portions 310 and the edge portion 370 as shown in FIG. 3 or FIG. 7. A picking area 361 may be formed in a picking portion of the can lid 300. The picking area 361 may be a circular area. The picking area 361 may be gripped by a picking device. The diameter of the circular picking area 361 may be from 2 mm to 6 mm. For example, the diameter of the circular picking area 361 may be (about) 4 mm.

When the can lid 300 includes picking portions 360, the picking device may not be in contact with the one or more electrode coupling portions 310 when picking up the cell lid during assembly of the battery cell 10, so that foreign substances or the like from the picking device may be prevented from flowing into the electrode coupling portions 310. Moreover, the picking portions 360 enable a more reliable gripping and transport of the can lid 300 in the process of assembling the battery cell 10.

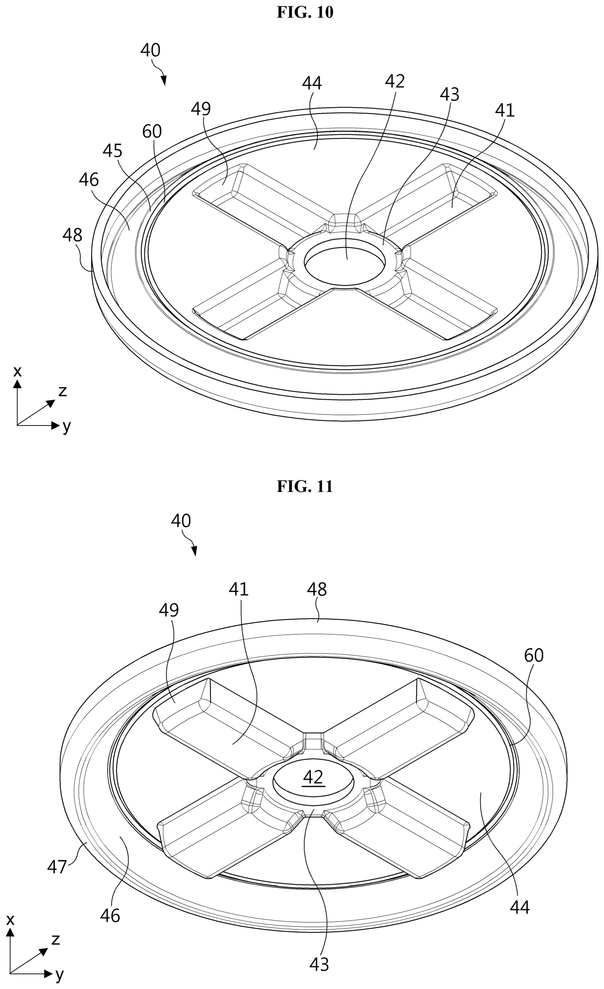

FIG. 9 is a cross-sectional view showing an example of a can lid 40 included in a battery cell 10 according to still another embodiment of the present disclosure. FIG. 10 is a perspective view of the upper side of the can lid shown in FIG. 9. FIG. 11 is a perspective view of the lower side of the can lid shown in FIG. 9.

In FIGS. 9 to 11, the peripheral edge of the can lid 40 may be bonded to the inner circumferential surface of the cell housing 200 by seam welding.

Preferably, the welding may be performed by a laser irradiated axially inward.

The can lid 40 may have a disk shape to cover the opening 210 of the cell housing 200.

The can lid 40 may include an edge portion - which is similar to the edge portion 370 of can lid 300. The edge portion of the can lid 40 comprises a mating portion 48, a curved portion 47, and a first inclined portion 46 from a radially outer side to an inner side. The mating portion 48, the curved portion 47, and the first inclined portion 46 may jointly form a U-shaped bent portion.

The mating portion 48 is provided on the radially outer peripheral edge of the can lid 40, and extends axially so that the outer circumferential surface thereof contacts the inner circumferential surface of the cell housing 200. The curved portion 47 is connected to the lower end of the mating portion 48 of the can lid 40, that is, the axially inner end of the mating portion 48. The curved portion 47 has a downwardly convex cross-sectional shape that extends inward radially toward the inner side axially. The slope of the curved portion 47 gradually becomes gentler as it moves away from the mating portion 48. Since the mating portion 48 extends axially in a direction parallel to the axial direction, the curved portion adjoining its lower (axially inner) end exhibits a gradually decreasing tangent slope from about 90 degrees as it curves inward. Thus, the slope of the tangent line of the outer circumferential surface of the curved portion 47 may gradually decrease from 90 degrees as it moves away from the mating portion 48.

The curved portion 47 merges smoothly into the inclined portion 46, so that the inclined portion continues from the curved portion. The first inclined portion 46 thus continues from the curved portion 47. The first inclined portion 46 extends outward axially toward the inner side radially. The slope of the first inclined portion 46 may be constant.

The can lid 40 having a U-shaped edge portion may be pressed into through the opening 210 of the cell housing 200. The curved portion 47 and the first inclined portion 46 provide a cross-sectional shape that allows the can lid 40 to be elastically deformable in a radial direction. Accordingly, when the can lid 40 is pressed into the opening 210, the can lid 40 may be press-fitted into the opening 210 as the U-shaped edge portion of the can lid 40 is compressed and then expands to the maximum extent without causing deformation of other parts. Accordingly, strong radial adhesion/frictional engagement between the sidewall portion 205 of the cell housing 200 and the mating portion 48 is achieved. In other words, the outward-facing circumferential surface of the mating portion 48 may be firmly pressed against the inner surface of the sidewall portion 205 of the cell housing 200 without kinking when pressing the can lid 40 into the opening 210 of the cell housing 200.

Therefore, the inner circumferential surface of the cell housing 200 and the edge portion of the can lid 40 may be bonded thereby preventing or at least minimizing the formation of gaps. In this way, the gap resulting from dimensional tolerances may be minimized when the sidewall portion 205 of the cell housing 200 and the can lid 40 are joined by butt welding.

The can lid 40 may be provided with one or more vent notch portions 60, as described in connection with the embodiments of the present disclosure related to FIGS. 2 to 8.

The can lid 40 may be directly bonded to the second uncoated portion 112b of the electrode assembly 100. The can lid 40 may be laser welded to the second uncoated portion 112b.

The can lid 40 may further include a support portion 45 and an electrode coupling portions 41. The electrode coupling portions 41 may extend from the support portion 45 radially inward towards the center of the can lid 40. The electrode coupling portions 41 may extend between a central portion and the support portion 45. The electrode coupling portions 41 are substantially rectangular recesses of the can lid 40 in the axially inward direction.

One or more vent notch portions 60 may be provided in the support portion 45. The support portion 45 may extend horizontally in the radial direction and may be provided radially further inward than the curved portion 47 in the can lid 40. The support portion 45 may be connected to the radially inner end of the first inclined portion 46 and may extend radially inward from the connection part. The support portion 45 provides an outward-facing flat outer surface between the first inclined portion 46 and the electrode coupling portions 41. Therefore, the surface of the support portion 45 may have a flat ring shape. When the battery cell 10 is oriented such that the can lid 40 faces downward and rests on a flat surface, the support portion 45 may serve as the foot of the battery cell 10.

The electrode coupling portions 41 extend in the radial direction. The electrode coupling portions 41 may be provided radially further inward than the support portion 45 in the can lid 40. The electrode coupling portions 41 may be connected to the radially inner side of the support portion 45 and may be recessed into the cell housing 200. The electrode coupling portions 41 may be provided by plastic processing of the can lid 40 so that a predetermined part of the can lid 40 is recessed inward in the axial direction. The can lid 40 may be formed from a metal sheet.

When the can lid 40 is pressed into the cell housing 200, the can lid 40 may be pressed into a position where the bottom surface (axially inner surface) of the electrode coupling portions 41 is in close contact with the second uncoated portion 112b of the electrode assembly 100 accommodated inside the cell housing 200. The electrode coupling portions 41 and the second uncoated portion 112b may be bonded by welding. The welding may be performed by a laser irradiated to the axial outer surface of the electrode coupling portions 41 from the axial outer side. The laser may be irradiated in a scanning manner along the radial direction to form a welded portion that extends long radially.

In this way, the can lid 40 functions as a cover that closes the opening 210 of the cell housing 200 and also as a negative electrode current collector plate.

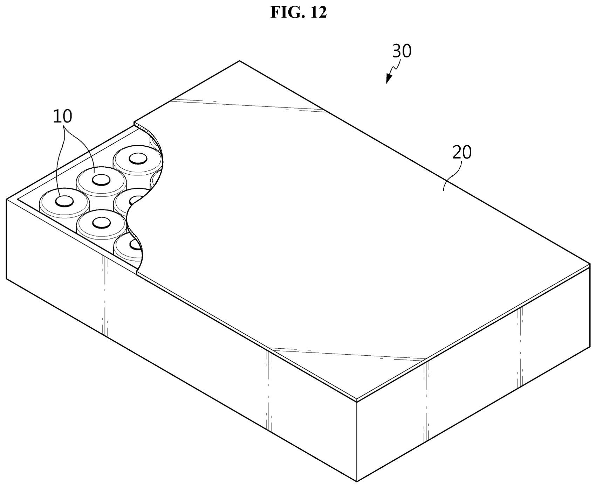

The bonding part of the electrode coupling portions 41 and the second uncoated portion 112b may extend radially. The can lid 40 may be provided with a plurality of electrode coupling portions 41. The electrode coupling portions 41 may be arranged radially around the center of the can lid 40. In particular, four electrode coupling portions 41 are shown in FIGS. 10 and 11. Respective pairs of electrode coupling portions 41 face each other with respect to the center of the can lid 40 and are aligned in a row, as shown in FIGS. 11 and 12.

Accordingly, the welded portions may be arranged radially and at equal intervals along the circumferential direction. The welded portions extend radially. The electrode coupling portions 41 may be connected to the second uncoated portion 112b, which extends from the outer circumferential side toward the core of the electrode assembly 100. The radial welding lines broaden the current path, thereby significantly reducing the internal resistance of the second electrode.

When a plurality of electrode coupling portions 41 are molded in this manner, an outer surface 44 of the can lid 40 that protrudes axially further outward than the electrode coupling portions 41 may be provided between two electrode coupling portions 41 that are adjacent to each other in the circumferential direction. The outer surface 44 may be connected to the radially inner side of the support portion 45. The outer surfaces 44 may be also denoted bridge portions that may be provided between two electrode coupling portions 41 that are adjacent to each other in the circumferential direction.

When the above-described can lid 40 is implemented, the bonding part between the can lid 40 and the cell housing 200 is simple, and there is no need to use a current collector plate when electrically connecting the second uncoated portion 112b to the cell housing 200. This may reduce the number of parts and assembly man-hours and further optimize the available internal volume of the cell housing 200 usable for the electrode assembly 100, thereby enabling an additional increase in energy density.

Furthermore, the electrode coupling portions 41 are in contact with the electrode assembly 100. There is a gap between the lower surface of the U-shaped edge portion of the can lid 40 and the lower surface of the electrode coupling portions of can lid 40, so that the U-shaped edge portion of the can lid 40 and the lower surface of the electrode coupling portions of can lid 40 are spaced apart from each other in the axial direction (x) by a separation distance T. Accordingly, this design may prevent welding heat generated during seam welding from being directly transmitted to the electrode assembly 100, thereby mitigating the risk of thermal damage to the electrode assembly 100. Moreover, since the U-shaped edge portion and the electrode assembly 100 are not in physical contact with each other, mechanical interference is avoided, particularly with the second uncoated portion 112b, helping to prevent cracking or kinking in the second uncoated portion 112b.

Meanwhile, the vent notch portion(s) 60 may be provided radially further outward than the electrode coupling portions 41. In the exemplary implementation in FIGS. 10 to 12, the vent notch portion(s) 60 is provided on the support portion 45. The vent notch portion(s) 60 may be implemented as a thinned wall portion of the can lid 40 in which both surfaces (the axially inner surface and outer surface) of the support portion 45 are notched. The vent notch portion(s) 60 may not deformed by the force applied when the can lid 40 is pressed into the cell housing 200, but may be broken when the internal pressure increases quickly, for example, due to a short circuit or the like occurring inside the cell housing 200, so that the electrode coupling portions 41 of the can lid 40 and the mating portion 48 of the can lid 40 may be separated from each other. Accordingly, the electrode coupling portions 41 connected to the second uncoated portion 112b and the cell housing 200 are electrically disconnected, and the internal space of the cell housing 200 is opened to the outside, which discharges the gas causing the internal pressure.

An injection port 42 may be provided in the can lid 40. The injection port 42 is similar to the injection port H described in connection with FIGS. 2 to 8. For example, the injection port 42 may be provided in the center of the electrode coupling portions 41. In a state in which the opening 210 of the cell housing 200 is covered by the can lid 40, the injection port 42 may be aligned with the core of the electrode assembly 100 accommodated in the cell housing 200.

The injection port 42 may be provided on the bottom surface (axially inner surface) of the can lid 40. For example, as shown in FIG. 11, the injection port 42 may be provided in a central portion of the can lid 40 that surrounds the injection port 42. The central portion may be formed by a protrusion 43 that protrudes axially upward from the electrode coupling portions 41 of the can lid 40 in the axially outward direction. The height of the protrusion 43 in the axial direction is set lower than the height of the support portion 45. The protrusion 43 is connected to the radially inward edge of the electrode coupling portions 41 and extends axially outward. The injection port protrusion 43 may be finished by covering and/or sealing the injection port 42 with a stopper. The stopper may be a ball, a plug, or other structures. The edge part of the stopper may be bonded with the edge part of the injection port 42 for sealing. Seam welding or other various sealing methods known in the art may be used to bond the edge part of the stopper with the edge part of the injection port 42.

Second inclined portions 49 of the electrode coupling portions 41 extend axially inward toward the radially inner side of the can lid 40. The second inclined portions 49 have a substantially constant slope between the electrode coupling portions 41 and the support portion 45 in the radial direction (y).

Moreover, the can lid 40 includes a mating portion 48, a curved portion 47, a first inclined portion 46, a support portion 45, a second inclined portion 49, and an electrode coupling portions 41 which are sequentially provided from the radially outer side to the inner side. The second inclined portion 49 may be steeper than the first inclined portion 46. Accordingly, the radial length of the support portion 45 and the electrode coupling portions 41 may be reduced to a maximum extent.

The vent notch portion(s) 60 may be provided near the center of the support portion 45 in the radial direction and is spaced apart from the first inclined portion 46 and the second inclined portion 49 in the radial direction. The vent notch portion(s) 60 are similar to the vent notch portion(s) 380 described in connection with FIGS. 2 to 8. Therefore, even when the support portion 45 is pressed, the pressing force is transmitted to the first inclined portion 46 and the second inclined portion 49 and does not affect the vent notch portion(s) 60. Therefore, the force applied when the can lid 40 is bonded to the cell housing 200 and the electrode assembly 100 does not deform the vent notch portion(s) 60.

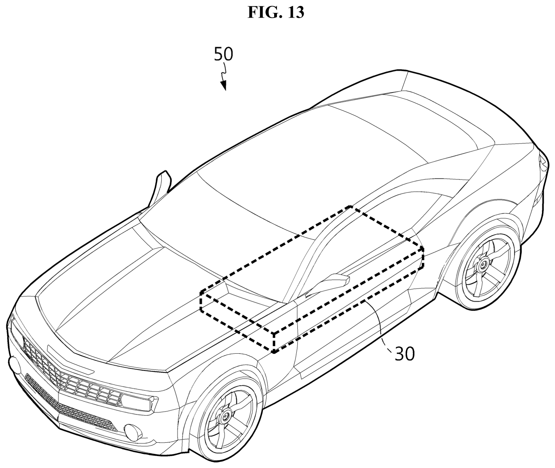

FIG. 12 is a view schematically showing the configuration of a battery pack according to an embodiment of the present disclosure. FIG. 13 shows a vehicle including a battery pack according to an embodiment of the present disclosure.

Referring to FIG. 12, a battery pack 30 according to the present disclosure may include a plurality of battery cell(s) 10. One or more of the battery cells 10 described above may be accommodated in a housing 20 of the battery pack 30 as shown in FIG. 12. The battery pack 30 may be constructed either by incorporating one or more battery modules - as an intermediate assembly stage -, or may be constructed directly without a battery module as illustrated in FIG. 12. Since the battery cell 10 has a large volume, a battery pack 30 may be implemented without the need for an intermediate structure such as a battery module. Moreover, since the negative electrode of the battery cell 10 may be connected through the can lid 300, the internal resistance is low. Additionally, since the vent notch portions 60, 380 may be provided on the can lid 40, 300 and does not occupy a separate space, energy density may be further increased as described previously herein. Accordingly, the energy density of the battery pack 30 including the battery cells 10 may be increased even more.

Additionally, a plurality of battery cells 10 may be included in the battery pack 30. The battery cells 10 are arranged in a predetermined number of rows. The battery cells 10 may be configured so that both the positive terminal 400 and the negative terminal (bottom portion 220) in each battery cell 10 are placed on one side of the battery cells 10. Therefore, when electrically connecting a plurality of battery cells 10, both the positive and negative electrodes may by accessed on one side of the battery cells 10, thereby simplifying the electrical connection structure (e.g. the busbar structure). This may further increase the energy density as the number of battery cells 10 that may be mounted in the same space may be increased. Furthermore, the complexity of the electrical wiring of the battery cells 10 is reduced. Therefore, the battery pack 30 offers excellent space efficiency, and improved electrical wiring simplicity. These features significantly enhance assembly efficiency during electric vehicle production and also facilitate easier handling and maintenance of the battery pack 30. In addition, as described above, each of the battery cells 10 may have a higher energy density compared to conventional designs. As a result, the battery pack 30 can store the same amount of energy in a smaller volume and with reduced weight.

Therefore, when the battery pack 30 including battery cells 10 is mounted in a vehicle 50 using electricity as an energy source, as illustrated in FIG. 13, the driving range of the vehicle 50 may be further increased in proportion to the energy consumed.

The vehicle 50 according to the present disclosure may include the battery pack 30. The vehicle 50 may be a hybrid vehicle or an electric vehicle. The vehicle 50 may further include various other components included in the vehicle in addition to the battery pack 30. For example, the vehicle 50 according to the present disclosure may further include a vehicle body, an electric motor, a control device such as an electronic control unit (ECU), or the like in addition to the battery pack 30 according to the present disclosure.

Electrical wiring may be performed on the bottom portion 220 of the cell housing 200 at the side of the terminal 400, i.e. no wiring may be required at the side of the can lid 40, 300. Since there may thus be no electric wiring at the side of the cell housing 200 that is sealed by the can lid 40, 300, the vent notch portion(s) 60, 380 formed in the can lid 40, 300 may more effectively discharge internal gas pressure. Furthermore, if a heat sink, a cooling plate, or a tray is positioned on the can lid 40, 300 side, assembly and cooling may be effectively achieved regardless of the electrical wiring connection part. In addition, the gas discharged from the inside of the secondary battery is discharged downward through the downward facing vent notch portions 60, 380 in the can lids 40, 300 of the battery cells 10. Usually, the secondary battery is mounted at position lower than that of the passengers of a vehicle (such as an electric vehicle, EV). Thus, when the gas were discharged upward from the secondary battery, it may cause harm to the passengers. The battery cell 10 of the present disclosure may effectively and safely discharge high-pressure gas inside the secondary battery. Safety is enhanced because of the gas discharge structures are provided in the can lids 40, 300 of the battery cells 10 which is irrelevant to the electrical wiring connection part at the opposite ends of the battery cells 10. Furthermore, when the gas is discharged due to the rupture of the vent notch portions 60, 380 in the battery cells 10, the gas is discharged downward and does not cause harm to the passengers, thereby greatly improving safety.

The present disclosure has been hereinabove described with regard to a limited number of embodiments and drawings, but the present disclosure is not limited thereto and it is obvious that a variety of modifications and variations may be made thereto. Therefore, the embodiments disclosed above should be considered from an illustrative perspective rather than a limiting perspective.

### [Description of Reference Numerals]

10: Battery cell
20: Housing
30: Battery pack
40: Can lid
41: Electrode coupling portion
42: Injection port
43: Protrusion
44: Outer surface
45: Support portion
46: Inclined portion
47: Curved portion
48: Mating portion
49: Second inclined portion
50: Vehicle
60: Vent notch portion
100: Electrode assembly
112a, 112b: Uncoated portion
200: Cell housing
205: Sidewall portion
210: Opening
220: Bottom portion
300: Can lid
310: Electrode coupling portion
311: Extended portion
320: Flat portion
321: Bent portion
330: Plug
331: Protrusion
332: Extension portion
340: Plug coupling portion
341: Insertion portion
342: Seating portion
350: Bridge portion
360: Picking portion
361: Picking area
370: Edge portion
371a: Curved portion
371b: Inclined portion
372: Mating portion
380: Vent notch portion(s)
390: Support portion
400: Terminal
500: Terminal gasket
600: positive electrode current collector plate
700: Insulator
H: Injection port
C: Core

## Claims

1. A can lid configured to close an opening of a cylindrical cell housing of a battery cell, the can lid being integrally formed from a conductive material and having a disk shape, the can lid comprising:
an electrolyte injection port disposed at a center of the can lid;
an edge portion formed along an outer periphery of the can lid, the edge portion being configured to couple to the cell housing of the battery cell;
a support portion extending radially inward from the edge portion
a central portion surrounding the electrolyte injection port; and
electrode coupling portions recessed in an axially inward direction relative to an axially outward-facing outer surface of the support portion, the one or more electrode coupling portions being configured to couple the can lid to an electrode assembly of the battery cell;
wherein the edge portion of the can lid has a profiled geometry configured to deform in the radial direction when engaging an inner surface of the cell housing in a press-fit manner.

2. The can lid of one of claim 1, wherein the edge portion has curved shape, preferably a U-shape, in cross-section.

3. The can lid of claim 1 or 2, wherein the edge portion includes, from a radially outer side to a radially inner side thereof:
a mating portion forming an end of the edge portion extending in the axial outward direction and providing an axially outward facing mating portion;
an inclined portion connecting the edge portion to the support portion; and
a curved portion connecting inclined portion to the axially inner end of the mating portion, wherein the curved portion has a convex cross-sectional shape that extends in the axially inward direction.

4. The can lid of claim 3, curvature of the curved portion has a gradually decreasing tangent slope from about 90 degrees as it curves radially inward towards the center of the can lid, wherein the curved portion merges smoothly into the inclined portion, which extends axially outward and radially inward at a substantially constant angle.

5. The can lid of one of claims 1 to 4, wherein the central portion is formed by a flat portion surrounding the electrolyte injection port; and
wherein the electrode coupling portions extend radially between the flat portion and the support portion.

6. The can lid of claim 5, wherein the axially outward-facing outer surface of the support portion and/or the axially outward-facing outer surface of the flat portion is disposed axially further inward than the mating portion of the mating portion.

7. The can lid of one of claims 1 to 6, wherein the support portion further comprises:
one or more vent notch portions disposed between the one or more electrode coupling portions and the edge portion, wherein the one or more vent notch portions are configured to rupture when an internal pressure of the battery cell reaches a threshold pressure.

8. The can lid of claim 7, wherein each of the one or more vent notch portions includes at least one groove formed in said outward-facing outer surface of the vent notch portion at respective radial positions in the vent notch portion.

9. The can lid of claim 8, wherein the groove forms a closed loop surrounding the one or more electrode coupling portions.

10. The can lid of claim 8 or 9, wherein the groove has a V-shape or U-shape.

11. The can lid of one of claims 1 to 10, wherein the support portion further comprises picking portions provided between a vent notch portion of the support portion and bridge portions extending in a radially outward direction from the central portion, wherein each of the picking portions forms an region that is elevated relative to the electrode coupling portions in an axially outward direction and the bridge portion to which the respective picking portion connects.

12. The can lid of claim 11, wherein the picking portions are substantially V-shaped or U-shaped.

13. The can lid of one of claims 1 to 12, wherein, in cross-section, an axial gap is defined between an inward-facing inner surface of the edge portion and an inward-facing inner surface of the electrode coupling portions, the inner surface of the edge portion being positioned radially outward relative to the inner surfaces of the electrode coupling portions.

14. The can lid of one of claims 1 to 13, further comprising bridge portions extending between the central portion and the edge portion, wherein each of the bridge portions delimits two adjacent electrode connection portions, and wherein the electrode connection portions are recessed, in the axially inward direction, relative to an outward-facing outer surface of the bridge portions.

15. The can lid of claim 13, wherein the bridge portions are recessed, in the axially inward direction, relative to the central portion and the edge portion.

16. The can lid of claim 13, wherein the central portion is recessed, in the axially inward direction, relative to the bridge portions.

17. The can lid of claim 14 or 15, wherein the central portion has radially recessed portions such that the radial length of the flat portion at locations connecting to the bridge portions is greater than the radial length at other locations of the central portion.

18. The can lid of claim 17, wherein the electrode connection portions extend radially into the recessed portions of the central portion.

19. The can lid of one of claims 1 to 19, wherein the central portion is a circular region of the can lid.

20. The can lid of one of claims 1 to 19, further comprising a plug coupling portion disposed along the periphery of the electrolyte injection port, the plug coupling portion being connected to the central portion and comprising an insertion portion adjacent to an circumferential edge of the electrolyte injection port and a seating portion extending radially from the insertion portion, the seating portion being defined by a step recessed in the axially inward direction relative to an outward-facing upper surface of the central portion.

21. The can lid of one of claims 1 to 20, wherein the electrode coupling portions are disposed in a radially symmetric arrangement with respect to the center of the can lid.

22. The can lid of one of claims 1 to 21, wherein can lid is a metal sheet including a plating layer on an axially inward-facing inner surface and an axially outward-facing outer surface thereof.

23. A battery cell comprising:
a cell housing including a sidewall portion, an opening provided at an axial end of the sidewall portion, and a bottom portion connected to the other axial end of the sidewall portion;
an electrode assembly provided in the cell housing;
a can lid according to one of claims 1 to 22 covering the opening of the cell housing.

24. The battery cell of claim 23, wherein the electrode assembly includes a first electrode and a second electrode, and wherein electrode assembly is accommodated inside the cell housing so that an uncoated portion of the second electrode faces the opening of the cell housing; and
wherein the electrode connection portions of the can lid are directly coupled to the uncoated portion of the second electrode; and
wherein the can lid electrically couples the uncoated portion of the second electrode to the cell housing.

25. The battery cell of claim 24, wherein the electrode connection portions are bonded to the uncoated portion of the second electrode by welds.

26. The battery cell of claim 24 or 25, wherein the uncoated portion of the second electrode includes a plurality of tabs bent radially inward towards a core of the electrode assembly thereby forming a connection surface that faces axially outward and that is in contact with an axially inward-facing inner surface of the electrode connection portions of the can lid.

27. The battery cell of one of claims 23 to 26, wherein the can lid is press-fitted into the cell housing, wherein the edge portion of the can lid is bonded to the sidewall portion of the cell housing.

28. The battery cell of claim 27, wherein an outer circumferential surface of the edge portion abuts an inner circumferential surface of the sidewall portion of the cell housing.

29. The battery cell of one of claims 23 to 28, wherein a void space is provided between an outward facing outer surface of the electrode assembly and the can lid at a radial location where the vent notch portion of the can lid is formed.

30. The battery cell of one of claims 23 to 29, wherein a gap is formed between an outward facing outer surface of the electrode assembly and the inward facing inner surface of the edge portion of the can lid.

31. The battery cell of one of claims 23 to 30, further comprising a plug installed in the injection port of the can lid.

32. The battery cell of claim 31, wherein the plug comprises:
an annular flange portion surrounding a central portion of the plug forming an extension portion that can be seated on a step-like seating portion of the plug coupling portion of the can lid, and
a protrusion at the central portion of the plug matching an inner diameter of the injection port.

33. The battery cell of claim 32, wherein the protrusion is inserted into an insertion portion of the plug coupling portion of the can lid by force-fit, shape-fit or a combination thereof, and the can lid and plug are bonded to each other at the extension portion of the plug.

34. The battery cell of claim 32 or 33, wherein a height of the seating portion of the plug coupling portion and a height of the extension portion of the plug is such that their combined height is equal to or less than the height of the plug coupling portion outside the seating portion or the height of the central portion outside the seating portion.

35. The battery cell of one of claims 24 or claims 25 to 34, when dependent on claim 24, further comprising:
a current collector electrically connected to an uncoated portion of the first electrode of the electrode assembly,
a terminal installed in a through hole provided in the bottom portion of the cell housing, wherein the terminal is electrically connected to the current collector.

36. The battery cell of claim 35, further comprising an insulator provided between the current collector and the bottom portion of the cell housing to electrically isolate the current collector from the cell housing.

37. The battery cell of claim 35 or 36, further comprising an electrically isolating gasket provided in between the bottom portion of the cell housing and the terminal to isolate the terminal from the bottom portion of the cell housing.

38. A battery pack comprising a plurality of battery cells according to any one of claims 23 to 37, wherein the battery cells are arranged in the battery pack with a uniform orientation such that the bottom portions of the battery cells are disposed at one side of the battery pack and the can lid are disposed at an opposite side of the battery pack.

39. A vehicle comprising a battery pack according to claim 37.
